(19) Europäisches Patentamt
European Patent Office
Office européen des brevets

(11) **EP 2 849 114 B1**

(12) **EUROPEAN PATENT SPECIFICATION**

(45) Date of publication and mention
of the grant of the patent:
**09.09.2015 Bulletin 2015/37**

(51) Int Cl.:
*G06F 21/62* *(2013.01)*    *G06F 21/41* *(2013.01)*

(21) Application number: **14184502.4**

(22) Date of filing: **11.09.2014**

(54) **System and method for automated management of user accounts**

System und Verfahren zur automatisierten Verwaltung von Benutzerkonten

Système et procédé de gestion automatisée de comptes d'utilisateurs

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2013   US 201314025046**

(43) Date of publication of application:
**18.03.2015   Bulletin 2015/12**

(73) Proprietor: **SAP SE**
**69190 Walldorf (DE)**

(72) Inventors:
• **Radkowski, John Christopher**
**69190 Walldorf (DE)**

• **Arumugam, Saye**
**69190 Walldorf (DE)**

(74) Representative: **Richardt Patentanwälte PartG mbB**
**Wilhelmstraße 7**
**65185 Wiesbaden (DE)**

(56) References cited:
**WO-A1-2006/103176      WO-A2-02/15530**
**US-A1- 2006 090 208      US-A1- 2007 073 699**
**US-A1- 2007 101 440      US-A1- 2011 277 026**

**Description**

TECHNICAL FIELD

This disclosure relates to creating and managing of user accounts enabling effective and secure restructuring and/or grouping of these accounts. The user accounts and information assigned to these accounts may be stored across computer systems communicatively coupled by one or more computer networks. The user accounts may be implemented as computer cloud services.

BACKGROUND

Almost any computer user has at least ten user accounts on different servers. For instance, it may be several bank accounts having internet interfaces/accounts, several E-Mail accounts, several accounts in social networks etc. Document US 2011/277026 A1 describes a system that helps a user managing a plurality of accounts.

Employees of companies have as usual several user accounts each as well. Every user account is maintained separately and may have specific computer security issues related to it. For instance, many Enterprise Resource Planning (ERP) systems use a job based security model where users are assigned roles based on particular jobs they perform. Roles are a collection of transaction functionality associated with an authorization object. Transaction functionality includes particular functions or functionality that a user needs to access. Authorization objects provide a complex set of rules that may identify data to be accessed, access or permission level, organizational values and/or other constraints for a user attempting to access the functionality.

SUMMARY OF THE INVENTION

A computer-implemented technology for providing enhanced management and/or reconfiguration of user accounts (user computer accounts) is described herein. Almost every computer user has multiple user accounts on various computer systems. Managing of each of them is a daunting task. However since almost every computer system is communicatively coupled with each other via computer networks a general management and/or reconfiguration of accounts of one of the users or groups of the users is possible. As it will be clearly seen from description hereon implementation the computer implemented technology may result in reduction of computer resources needed for maintaining of the user accounts and/or improvement computer security. The computer implemented technology enables optimum compacting and/or grouping of information related to authentication of users having user accounts in conjunction with information related to functionalities assigned to the user accounts. The functionality assigned to a user account is understood here in a very broad sense. For instance it may be operations on databases, operations related administration of computer systems, operations related to execution of various computer programs, operations related to management of computer networks.

It is an objective of embodiments of the invention to provide for a computer system configured to perform management/reconfiguration of user accounts on computer systems communicatively coupled with each other via one or more computer networks, a computer-implemented method for performing the same, and a computer readable medium having stored thereon computer executable code for execution by a micro-processor controlling a computer system, wherein execution of the instructions of the executable code cause the microprocessor to execute a computer-implemented method of managing/reconfiguring of user accounts on computer systems communicatively coupled with each other via one or more computer networks. Said objective is solved by the subject matter of the independent claims. Advantageous embodiments are described in the dependent claims.

One embodiment provides for a computer implemented method for management of first accounts of users on computer systems communicatively coupled with each other by one or more computer networks. Each of the users has at least one assigned first account on at least one of the computer systems. Each of the users of at least a portion of the users has more than one assigned first account on at least one of the computer systems. Each of the first accounts has one or more assigned authentication values and one or more assigned computer codes which execution is enabled for the user having the each of the first accounts after his authentication using the one or more assigned authentication values is performed on the respective computer system that has that first account, wherein the authentication values and the computer codes are stored across the computer systems. The method comprises the following: obtaining, using at least one processor of one of the computer systems, from the first accounts on the computer systems relationship data comprising relationship information between a set of the users, a set of the computer codes, and a set of the authentication values, the relationship information identifying which first code subset of the set of computer codes and which first authentication subset of the set of the authentication values are assigned to each user of the set of the users; selecting, using the at least one processor, a user subset of the set of users, a second code subset of the set of computer codes, and a second authentication subset of the set of the authentication values, wherein the user subset, the second code subset, and the second authentication subset are selected according to a set of selection rules comprising the following rules: the second code subset is comprised in each of the first code subsets assigned to any of the respective users of the user subset, the user subset comprises more than one user, and the second authentication subset is comprised in one of the first authentication subsets assigned to one of the users of the user subset; and generating, using the at least one processor, a second account for the each of the users of the user subset, wherein the second authentication subset and the second code subset are assigned to the second account, wherein execution of any of the computer codes of the second code subset is enabled for the each of the users of the user subset after his authentication is performed on the one of the computer systems using the second authentication subset.

The computer-implemented method of this embodiment takes advantage of similar elements (authentication values and computer codes) assigned to some of the user accounts. After identification of identical groups of computer codes assigned to each of the users of a group of the users a new user account is generated for each of the users, wherein the group of computer codes is assigned the new account has the assigned. The authentication values assigned to the user accounts of the users of the group of the users may be selected partially or completely to the new account according to the selection rules described in embodiments mentioned further in the text. The term computer code is understood in this embodiment and further on in the text in a very broad sense. The computer code may represent one or more operations needed for executing a transaction in transactional processing, one or more operations needed for executing an operation on a database, an executable code, one or more operations needed for configuring or management of one or more computer systems or computer networks, etc. The term authentication value is understood in this embodiment and further on in the text in a very broad sense as well. The authentication value may be a geographical location of a user, a job title of a user, or element of computer security like password, etc. Some authentication values may be common for a group of users.

In another embodiment the computer systems and the computer networks are comprised in a computer cloud, wherein the authentication values and the computer codes are stored across the computer systems in the computer cloud.

In another embodiment the method further comprises: deassigning, using the at least one processor, all of the computer codes of the of the second code set from all of the first accounts associated with any of the users of the user subset; and deleting, using the at least one processor, each of the first accounts, when the each of the first accounts has no assigned computer codes.

This embodiment may provide for optimization of overall number of accounts of users. It prevents redundant assignment of the same groups of computer codes to old (first) accounts and new (second) accounts.

In another embodiment the set of the users comprises all of the users having at least one assigned first account.

This embodiment formulates that all old (first) accounts are processed in parallel, while only a portion of all old (first) accounts is processed in parallel according to the embodiment mentioned first in the summary of the invention. Both of approaches may have advantages. Processing of all accounts in parallel may result in the best compact agglomeration of computer codes and generation of new (second) accounts covering the biggest possible amount of users. On the other hand the amount of the accounts may be very big and as a result thereof processing of all of them in parallel may demand a lot of computer resources. That is why splitting of the accounts in groups and processing them separately may require less computer resources. The computer implemented method described in the embodiment mentioned first in the summary of the invention is universal. It may be applied again to the new (second) accounts when processing of groups of the accounts is finished. It may even be applied when only a portion of groups is processed, i.e. to a mix of old (first) and new (second) accounts.

In another embodiment the set of the selection rules further comprises another rule: the users of the user subset and the computer codes of the second code subset are selected in a way enabling maximization of a product of a number of the computer codes in the second code subset and a number of the users in the user subset.

In another embodiment the set of the selection rules further comprises another rule: the users of the user subset and the computer codes of the second code subset are selected in a way that a code association value for at least one of the users of the user subset is bigger than a first threshold value, wherein the code association value for each of the users of the user subset is equal to a ratio of the number of the computer codes in the second code subset and a number of the computer codes in the first code subset assigned to the each of the users of the user subset.

In another embodiment the set of the selection rules further comprises another rule: the second authentication subset is further comprised in each of the first authentication subsets assigned to any of the users of the user subset except the one of the users of the user subset having the assigned first authentication subset comprising the second authentication subset.

In another embodiment the set of the selection rules further comprises another rule: the user subset and the second authentication subset are selected in a way that an authentication association value for at least one of the users of the user subset having the assigned first authentication subset comprising the second authentication subset is bigger than a second threshold value, wherein the authentication association value for each of the users having the assigned first authentication subset comprising the second authentication subset equals to a ratio of a number of the authentication values in the second authentication subset and a number of the authentication values in the first authentication subset assigned to the each of the users having the assigned first authentication subset comprising the second authentication subset.

In another embodiment the selecting further comprises selecting a third authentication subset, wherein the third authentication subset comprises all of the authentication values of all of the first authentication subsets assigned to the users of the user subset which are not comprised into the second authentication subset, wherein the third authentication subset is assigned to the second account and execution of any of the computer codes of the second code subset is enabled for the each of the users of the user subset after his authentication is performed on the one of the computer systems using the second and the third authentication subset.

In another embodiment the computer-implemented method further comprises: removing, using the at least one processor, the second code subset from each of the first code subsets assigned to any of the users of the user subset; and repeating of performing of the selecting and the generating operation after performing of the removing operation.

This embodiment discloses an example iterative looping of the computer implemented method enabling processing of all old (first) accounts assigned to users of a set (group) of users whose old (first) accounts have to be processed.

In another embodiment of the first authentication subsets comprise at least one of the following authentication values: one or more attributes related to computer security, a business area, a location, a plant, a job function, a job title, a personnel area, an employee group, or an employee subgroup.

In another embodiment the computer-implemented method further comprises: presenting, using the at least one processor, a user interface to a user on the one of the computer systems, wherein the user interface is configured to: present at least one of the following: at least a portion of the relationship data, at least a portion the set of the authentication values, at least a portion the set of the computer codes, at least a portion the set of users, at least a portion of each of the first code subsets, at least a portion of each of the first authentication subsets, at least a portion of the user subset, at least a portion of each of the second authentication subsets, at least a portion of each of the second code subsets, one or more rules of the set of selection rules, and the first threshold value, the second threshold value; and enable user modification of at least one of the following: the set of users, the subset of users, the second authentication subset, the second code subset, the first threshold value, the second threshold value, value of an activation status of one or more rules of the set of selection rules, wherein each of the rules having the value of the activation status equal to one value is used for performing of the selecting operation, wherein each of the rules having the value of the activation status equal to another value is ignored when the selecting operation is being performed.

This embodiment discloses an advantage of performing of the computer implemented method in an interactive way. A user may monitor execution of steps the computer-implemented method, correct parameters controlling execution of the computer-implemented method, and modify generated results.

Another embodiment provides for a computer readable medium having stored thereon computer executable code for execution by a micro-processor controlling a computer system, wherein execution of the instructions of the executable code cause the microprocessor to execute a computer-implemented method described in the embodiments above.

Another embodiment provides for a computer system comprising: a memory, a computer processor coupled to the memory; instructions stored in the memory and executable by the processor, wherein the computer system is configured to communicate with other computer systems via one or more computer networks, wherein each of users has at least one assigned first account on at least one of the computer systems, wherein each of the users of at least a portion of the users has more than one assigned first account on at least one of the computer systems, wherein each of the first accounts has one or more assigned authentication values and one or more assigned computer codes which execution is enabled for the user having the each of the first accounts after his authentication using the one or more assigned authentication values is performed on the respective computer system that has that first account, wherein the authentication values and the computer codes are stored across the computer systems. Execution of the instructions configures the system to: obtain from the first accounts on the computer systems relationship data comprising relationship information between a set of the users, a set of the computer codes, and a set of the authentication values, the relationship information identifying which first code subset of the set of computer codes and which first authentication subset of the set of the authentication values are assigned to each user of the set of the users; select a user subset of the set of users, a second code subset of the set of computer codes, and a second authentication subset of the set of the authentication values, wherein the user subset, the second code subset, and the second authentication subset are selected according to a set of selection rules comprising the following rules: the second code subset is comprised in each of the first code subsets assigned to any of the respective users of the user subset, the user subset comprises more than one user, and the second authentication subset is comprised in one of the first authentication subsets assigned to one of the users of the user subset; and generate, using the at least one processor, a second account for the each of the users of the user subset, wherein the second authentication subset and the second code subset are assigned to the second account, wherein execution of any of the computer codes of the second code subset is enabled for the each of the users of the user subset after his authentication is performed on the one of the computer systems using the second authentication subset.

In another embodiment the execution of the instructions further configures the system to: deassign all of the computer codes of the of the second code set from all of the first accounts associated with any of the users of the user subset; and delete each of the first accounts, when the each of the first accounts has no assigned computer codes.

In another embodiment the set of the users comprises all of the users having at least one assigned first account.

In another embodiment the set of the selection rules further comprises another rule: the users of the user subset and the computer codes of the second code subset are selected in a way enabling maximization of a product of a number of the computer codes in the second code subset and a number of the users in the user subset.

In another embodiment the execution of the instructions further configures the system to: remove the second code subset from each of the first code subsets assigned to any of the users of the user subset; and repeat of performing of the selecting and the generating operation after performing of the removing.

In another embodiment the system further comprises a user interface. The execution of the instructions further configures the system to perform the following via the user interface: present at least one of the following: at least a portion of the relationship data, at least a portion the set of the authentication values, at least a portion the set of the computer codes, at least a portion the set of users, at least a portion of each of the first code subsets, at least a portion of each of the first authentication subsets, at least a portion of the user subset, at least a portion of each of the second authentication subsets, at least a portion of each of the second code subsets, one or more rules of the set of selection rules, and the first threshold value, the second threshold value; and enable user modification of at least one of the following: the first threshold value, the second threshold value, value of an activation status of one or more rules of the set of selection rules, wherein each of the rules having the value of the activation status equal to one value is used for performing of the selecting operation, wherein each of the rules having the value of the activation status equal to another value is ignored when the selecting operation is being performed.

BRIEF DESCRIPTION OF DRAWINGS

FIG. 1 is a diagram illustrating a multitier application environment that includes transaction functionality and authorization objects.

FIG. 2 is a diagram of a representative authorization object.

FIG. 3 is a diagram illustrating how transaction codes and authorization objects may be combined into roles and assigned to users or other entities.

FIG. 4 is a diagram illustrating role refactoring from job based roles to a set of task roles and enabler roles.

FIG. 5 is a diagram illustrating a representative role refactoring process.

FIG. 6 illustrates various systems involved in an example role refactoring process along with representative inputs and outputs.

FIG. 7 illustrates how representative inputs may be processed to create various maps that may be used in role refactoring.

FIG. 8 illustrates a representative system to take maps and refactor them into task and enabler roles.

FIG. 9 is a process diagram illustrating a representative role refactoring process.

FIG. 10 illustrates a representative role evaluation system.

FIG. 11 illustrates use of an in-memory database in one of two configurations in conjunction with the methodologies discussed herein.

FIG. 12 is a block diagram of a computer processing system, within which a set of instructions for causing the computer to perform any one or more of the methodologies discussed herein may be executed.

DETAILED DESCRIPTION

The description that follows includes illustrative systems, methods, techniques, instruction sequences, and computing machine program products ofillustrative embodiments. In the following description, for purposes of explanation, numerous specific details are set forth in order to provide an understanding of various embodiments of the inventive subject matter. It will be evident, however, to those skilled in the art that embodiments of the inventive subject matter may be practiced without these specific details. In general, well-known instruction instances, protocols, structures, and techniques have not been shown in detail.

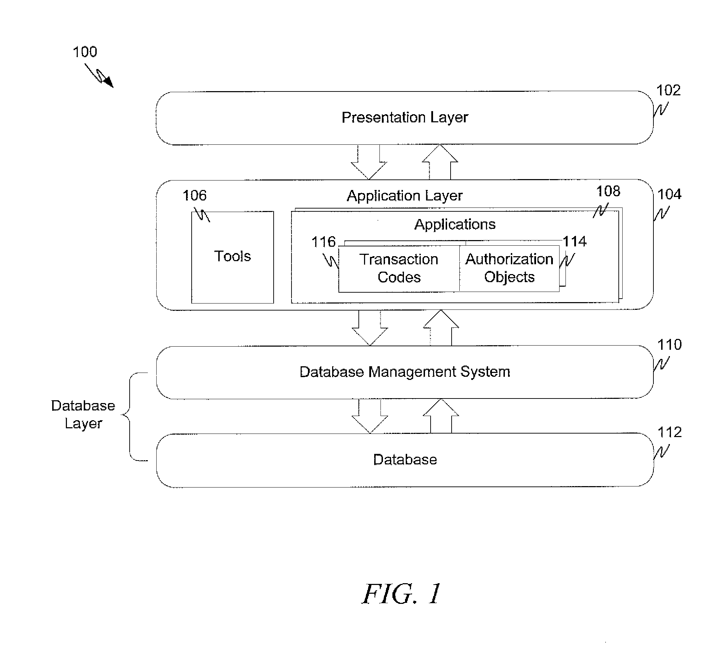

FIG. 1 is a diagram illustrating a multitier application environment that includes transaction functionality and authorization objects.

The environment is shown generally as 100. Such an environment may be used, for example, in enterprise level applications. In a multitier application environment, the application functions are distributed among multiple tiers or layers in order to gain flexibility in deployment, hardware, scalability, reuse/redeployment, or other characteristics. In this disclosure, the terms "tier" and "layer" will be used interchangeably.

In this type of environment, the top layer is typically referred to as the presentation layer 102. The presentation layer 102 provides a mechanism for input, allowing users to manipulate the system, enter data, produce results, etc. The presentation layer 102 often provides a graphical user interface (GUI) on individual machines. However, the presentation layer 102 may also use servers, virtual machines, or other "backend" type machines to present a user interface via a browser or other thin client.

The application layer 104 is where business logic is executed and may include various physical or virtual machines. In the context of this disclosure,"business logic" means functionality such as various applications 108 and/or tools 106 that perform processing. Applications 108 and/or tools 106 may be any type of applications and/or tools and need not specifically be associated with a business or operation of a business, although in many instances they may be.

Applications 108 may provide functionality to a user. This functionality may be referred to as "transaction functionality." Additionally, or alternatively, a system may provide built-in transaction functionality. In this application, transaction functionality means any particular functionality (or set of functionality) that may be accessed by a user or other entity. The functionality may be part of a transaction (in the sense that it may be fully executed or rolled back) or may be outside of a transaction. In this application, such transaction functionality may be accessed or referenced by a "transaction code," sometimes abbreviated as "t-code." For purposes of this application, transaction code, or t-code, may be used interchangeably with the transaction functionality itself. Transaction codes are represented in FIG. 1 by transaction codes 116.

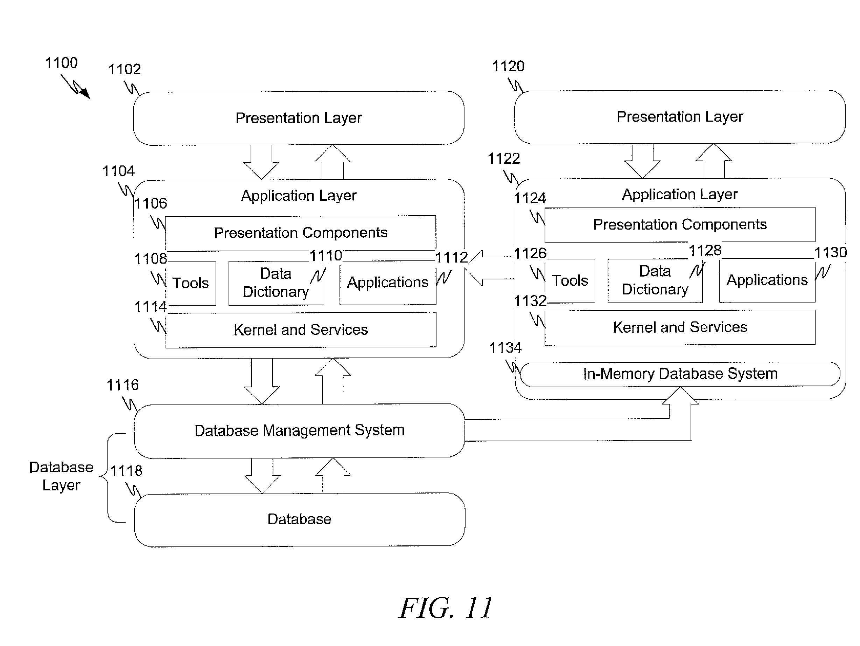

Authorization objects may be coupled with a transaction code. In FIG. 1, authorization objects 114 are coupled with transaction codes 116. Although the plural is used, singular is also included (e.g., a transaction code may be associated with an authorization object). Authorization objects 114 provide a complex set of rules that may identify data to be accessed, access or permission level, organizational values and/or other constraints for a user attempting to access the functionality. "Organizational value" means some characteristic that describes the organization or a user's relationship to the organization. For example, organizational values may include a geographic region, a facility location, a department and/or group within the organization, a job title, a job function, a plant name, and so forth. Different organizations describe their organization and the relationship of users within the organization in different ways. These are encompassed within the definition of organizational value. The database layer (collectively 110 and 112) holds the data needed for functioning of the application layer 104 and/or presentation layer 102. The database layer typically includes one or more database management systems 110 along with their associated database(s) 112. In many instances the database system will be a relational database system. As discussed in conjunction with FIG. 11 below, the database may be an in-memory database, or an in-memory database may be used in conjunction with a traditional disk-based database. Mechanisms may be put in place to make the application layer 104 independent of the specific database management system 110 used in the database layer. This allows applications 108 and tools 106 to operate within various deployments/implementations without tying applications 108 and tools 106 to a specific database. The mechanisms may include a data dictionary that contains definitions and other information that can be used by system components.

Fig. 1 illustrates just one of many examples wherein transaction functionalities and authorization objects are associated. The scope of the present invention goes far beyond this example. For instance authorization objects may be authentication values and transaction functionalities may be computer codes. The computer codes and the authentication values may be interpreted in very broad sense as it mentioned in the summary of the invention. The computer implemented technology disclosed herein may be applied for a broad spectrum of computer systems being communicatively coupled with each other via one or more computer networks. The computer systems and the one or more networks may be comprised in a computer cloud. Users may use their accounts on the computer systems for execution of the computer codes assigned to their accounts after their authentication using respective authentication values. Each of the users has at least one assigned first account on at least one of the computer systems. Each of the users of at least a portion of the users has more than one assigned first account on at least one of the computer systems. Each of the first accounts has one or more assigned authentication values and one or more assigned computer codes which execution is enabled for the user having the each of the first accounts after his authentication using the one or more assigned authentication values is performed on the respective computer system that has that first account. The authentication values and the computer codes are stored across the computer systems. For instance one account may have several assigned computer codes being stored on different computer systems. Authentication values assigned to of one of the accounts may be stored on different computer systems as well.

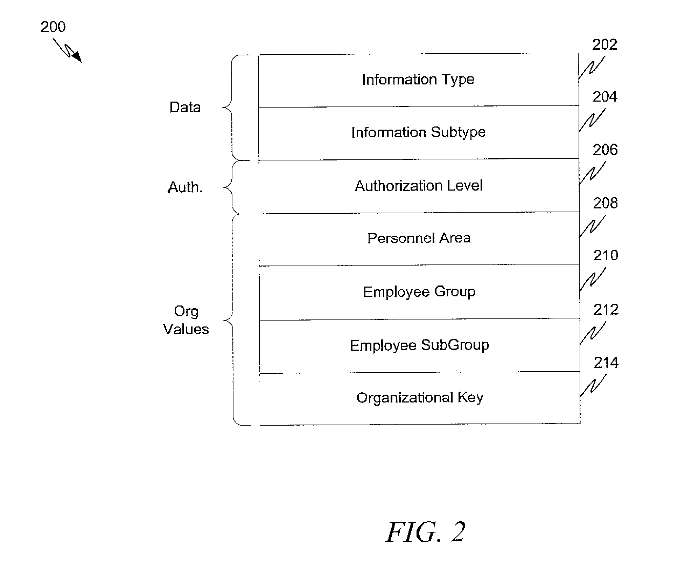

FIG. 2 is a diagram of a representative authorization object 200. Authorization objects provide a list of fields that may lead to a complex set of rules that may identify data to be accessed, access or permission level, organizational values and/or other constraints for a user attempting to access the functionality. The fields of an authorization object may be related by AND, such that access may be granted when all conditions defined by the fields are true. Authorization objects may be divided into classes if desired. An object class is a logical combination of authorization objects and may correspond, for example, to an application (financial accounting, human resources, and so on).

The representative authorization object 200 of FIG. 2 has fields that correspond to the data to be accessed, the authorization level granted, and organizational values specifying who may access the data and at what level. Thus, the representative authorization object 200 includes information type 202 and information subtype 204 which indicate that authorizations for data may be assigned at the information type and/or subtype. Authorization level 206 specifies what rights are granted (e.g., view/read, modify, create, etc.). Organizational values such as personnel area 208, employee group 210, employee subgroup 212, and organizational key 214 indicate the rights for the information type / information subtype that may be granted according to an user's personnel area, employee group, employee subgroup, and/or organizational key.

When these fields are assigned values and associated with a particular transaction code (or set of codes), access to the transaction code and associated data may be granted according to the values. If, for example, authorization object 200 is within a Human Resource (HR) object class, authorizations for personnel data within HR may be granted at the information type/subtype according to an employee personnel area, employee group, employee subgroup and organizational key.

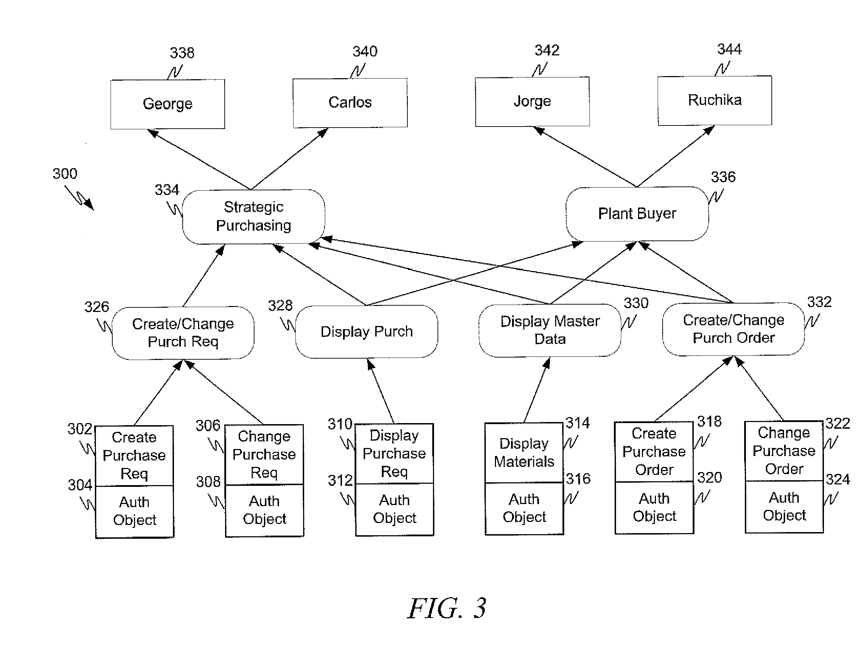

FIG. 3 is a diagram illustrating how transaction codes and authorization objects may be combined into job based roles (user accounts) and assigned to users or other entities. This is often used in a job based role security model. The relationship between transaction codes (computer codes)/authorization objects (authentication values), job based roles (user accounts), and users is shown generally as 300. At the bottom of the diagram, various transaction code/authorization object pairs are illustrated. These include create purchase request t-code 302 with its associated authorization object 304; change purchase request t-code 306 with its associated authorization object 308; display purchase request t-code 310 with its associated authorization object 312; display materials t-code 314 with its associated authorization object 316; create purchase order t-code 318 with its associated authorization object 320; and change purchase order t-code 322 with its associated authorization object 324. Create purchase request t-code 302 and change purchase request t-code 306 along with their associated authorization objects 304 and 308 are combined into a role entitled create/change purchase request 326. Display purchase request t-code 310 and its associated authorization object 312 are assigned to the display purchase role 328. Display materials t-code 314 and its associated authorization object 316 are assigned to the display master data role 330. Finally, create purchase order t-code 318 and change purchase order t-code 322 along with their authorization objects 320 and 324 are combined into the create/change purchase order request role 332.

In some role based security model systems, roles can be combined into other roles, sometimes referred to as composite roles. In the example of FIG. 3, the strategic purchasing role 334 is a composite role that includes the create/change purchase request role 326, the display purchase request role 328, the display master data role 330 and the create/change purchase order role 332. The plant buyer role 336 is a composite role that includes the display purchase role 328, the display master data role 330, and the create/change purchase order role 332.

Once a structure of roles is created, they may be assigned in various combinations to various users or entities, typically based on jobs. Thus, George 338 and Carlos 340 may be assigned the strategic purchasing role 334 while Jorge 342 and Ruchika 344 may be assigned the plant buyer role 336. Job based role security gives a great deal of control over exactly how various permissions are structured and assigned to users or other entities within the organization. However, job based role security may also be very complex, with an organization having thousands upon thousands of roles in the system assigned in a variety of combinations. Thus, maintaining the roles of a job based role security model structured as illustrated in FIG. 3 may be daunting and may, in fact, create security problems since it is so difficult to manage.

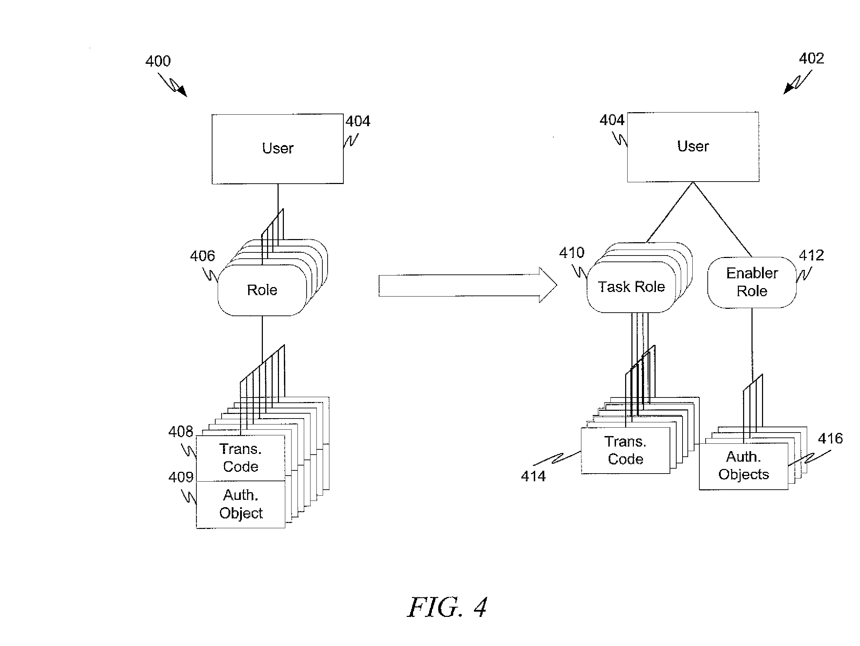

FIG. 4 is a diagram illustrating role refactoring from job based roles to a set of task roles and enabler roles. Task based roles include only the task or t-code component of a job based role. In order to provide the appropriate access, tasks are combined with enabler roles and assigned to the user. Enabler roles typically include the authorization object part of the role, based on some organizational value or set of organizational values. Separation of the organizational values from the tasks simplifies the role design and reduces the number of roles, in many instances significantly. Reductions of 90% in the number of roles are not uncommon. Task based design does result in more roles per user, but the tradeoff is in the maintenance of the roles themselves, which may be significantly simpler.

In FIG. 4, a job based role security model 400 is shown generally. A user 404 is typically assigned a number of job based roles 406. Each job based role 406 may include a number of transaction codes 408 along with their associated authorization objects 409. To refactor the roles into the task roles and enabler roles, various task roles 410 are developed, each having a number of transaction codes 414 associated with them. Task roles 410 and the associated transaction codes 414 define which transaction codes 414 a user needs to access in order to perform their job functions. Restrictions on the scope of the transaction codes 414 come in the form of enabler roles 412 which, along with their associated authorization objects 416, define the scope of data that a user is allowed to access.

As an example, suppose a user needs to be able to create a new purchase order, modify an existing purchase order, and view existing purchase orders. The scope for this particular user is that the new purchase order may only be created or an existing purchase order modified for her home geographic region. However, the user is allowed to view purchase orders not only from her home geographic region but from surrounding geographic regions as well. Thus, task roles with the appropriate t-codes may be created to give the user access to the needed functionality. Enabler roles for the home geographic region and for the surrounding geographic regions can be created. These can then be assigned to the user to give the user access to all the functionality and the appropriate scope.

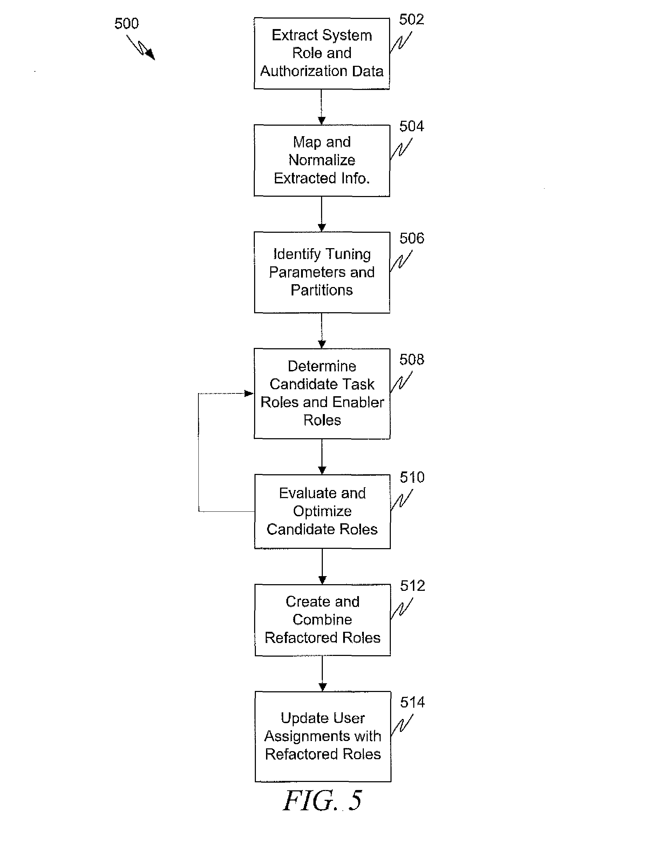

Turning back to the generalized example mentioned above, wherein the users have first accounts on computer systems being communicatively with each other via one or more computer networks, a scheme 400 depicted on the Fig. 4 illustrates relation between accounts, authentication values, and computer code. The user 404 has several first accounts 406. Each of the first accounts 406 has an assigned set of authentication values 409 and an assigned set of computer codes 408. The process of moving from a job based role security model 400 to a task enabler role based model 402 may be accomplished through role refactoring. FIG. 5 is a diagram illustrating a representative role refactoring process, shown generally as 500. At operation 502 the process extracts the role and authorization information to be refactored. For example, role and authorization information may be extracted from a company's Enterprise Resource Planning (ERP) system, from various line of business applications, etc. The extracted information is the set of information to be refactored so that new refactored task and enabler roles may be created. Extracted information may include user assignment data including what organization values apply to a user such as geographic location, job title, what facility a user works in, which department a user works in, what group a user works in, etc. Extracted information may also include roles assigned to a user, a role to t-code map which includes the t-codes included in a given role, authorization objects related to t-codes, user identity and/or other organizational information such as how an organization is structured, which departments and/or groups are related to other departments and/or groups, etc. Since the extracted information is pulled from a variety of systems, it likely exists in a variety of formats and has a variety of relationships. In operation 504 of FIG. 5, the extracted data is normalized and mapped into a common structure for processing. Examples of such mapping are discussed below, but any normalization and/or mapping may be used as long as it is sufficient to make the data accessible for further processing. Operation 504 may also include correcting data that is incorrect, eliminating data that does not further the mapping goal, and supplementing the data if desired/needed.

Operation 506 identifies the tuning parameters and partitions that will be used in the role refactoring. Tuning parameters and partitions are discussed in greater detail below. Tuning parameters and partitions influence the role refactoring process and allow a user to match the role refactoring algorithm to a particular corporate structure used in a business, a particular strategy for role refactoring, determine the correlation between the new refactored roles and the old roles, etc. In short, the tuning parameters and partitions allow the algorithm to be matched to particular role refactoring objectives.

Operation 508 illustrates the process of identifying candidate task and enabler roles. Details of this process are discussed in greater detail below. Operation 508 represents the process of refactoring the normalized information in accordance with the tuning parameters and partitions. Operation 508 produces candidate task and enabler roles, as well as identifying what task and enabler roles are assigned to what user to achieve the refactoring goals.

Operation 510 represents any evaluation of the candidate task and enabler roles that may occur, including tuning and/or optimization. If the tuning parameters include statistical measures for correlation between existing roles and candidate task and enabler roles, those statistical measures may be calculated and checked as part of operation 510 to ensure that refactoring goals are met. Potential statistical measures are discussed in greater detail below. Once candidate task and enabler roles have been created and tested for suitability, they may be created in the system and combined as appropriate to create the task and enabler roles to be assigned to users. Operation 512 represents this process. Creating task and enabler roles typically uses system APIs or UIs to create the identified roles within the ERP and/or other systems where they will be assigned. In many instances this process may be automated. However, in some instances, automation may be supplemented by user interaction to ensure appropriate creation. In still other instances, it may be desirable for users to manually create the roles.

After task and enabler roles have been created in the system, they are assigned to users as identified in the refactoring process. Operation 514 represents this process.

Turning back to the generalized example mentioned above, wherein the users have first accounts on computer systems being communicatively with each other via one or more computer networks, the flow diagram of the operations of the process 500 depicted on the Fig. 5 may be applied of management/restructuring of the first accounts and generating of second accounts. The process may be performed using at least one processor of one of the computer systems. Operations 502 and 504 represent a process of obtaining from the first accounts on the computer systems relationship data comprising relationship information between a set of the users, a set of the computer codes, and a set of the authentication values, the relationship information identifying which first code subset of the set of computer codes and which first authentication subset of the set of the authentication values are assigned to each user of the set of the users. The set of users may comprise all of the users having the first accounts or only a portion of the users having the first accounts. One or more of the authentication values may be comprised in one or more first authentication subsets. One or more of the authentication values may be comprised in one or more first authentication subsets. One or more of the computer codes may be comprised in one or more first code subsets. Generation of the first code subsets and of the first authentication subsets may be illustrated on the following example. For instance one of the users has two first accounts. One of the first accounts has assigned authentication values "V1" and "V2" and assigned computer codes "C1" and "C2". Another first account has assigned authentication values "V2" and "V3" and assigned computer codes "C2" and "C3". In this case, the resulting code subset comprises computer codes "C1", "C2", and "C3"and the resulting authentication subset comprises authentication values "V1", "V2", and "V3". The operation 504 may further represent a process of formatting/normalization of the heterogeneous local relationship information from different computer systems. This process may be needed because of different data structures/formats used for storing of local relationship information of the accounts on various computer systems. The local relationship information describes assignment of accounts to users on computer systems. The local relationship information further describes assignment of authentication values and computer codes to accounts on computer systems. Operations 506, 508 and 510 represent a process of selecting a user subset of the set of users, a second code subset (task role) of the set of computer codes, and a second authentication subset (enabler role) of the set of the authentication values, wherein the user subset 404, the second code subset 410, and the second authentication subset 412 are selected according to a set of selection rules comprising the following rules (optimization criteria for the task role and the enabler role): the second code subset is comprised in each of the first code subsets assigned to any of the respective users of the user subset, the user subset comprises more than one user, and the second authentication subset is comprised in one of the first authentication subsets assigned to one of the users of the user subset.

Operation 512 represents a process of generating a second account for the each of the users of the user subset, wherein the second authentication subset and the second code subset are assigned to the second account, wherein execution of any of the computer codes of the second code subset is enabled for the each of the users of the user subset after his authentication is performed using the second authentication subset. The second account may be generated on the same computer system which processor was used for generating of the second account. Alternatively, the second account may be generated on any other of the computer systems. The second authentication subset may be stored on the same computer system on which the second account is generated alternatively the second authentication subset may be stored on any other computer system. Authentication of the user having the second account may be performed on the same computer system on which the second account is generated; alternatively the authentication of the user having the second account may be performed on any other computer system.

Operation 514 represents a process of deassigning all of the computer codes of the of the second code set from all of the first accounts associated with any of the users of the user subset and deleting each of the first accounts, when the each of the first accounts has no assigned computer codes. This process enables deleting of redundant assignment to the first accounts of the computer codes which are already assigned to the newly generated second accounts. This process further enables deleting the redundant first accounts which have no assigned computer codes.

The process 500 may comprise another operation of presenting a user interface to a user on the one of the computer systems, wherein the user interface is configured to: present at least one of the following: at least a portion of the relationship data, at least a portion the set of the authentication values, at least a portion the set of the computer codes, at least a portion the set of users, at least a portion of each of the first code subsets, at least a portion of each of the first authentication subsets, at least a portion of the user subset, at least a portion of each of the second authentication subsets, at least a portion of each of the second code subsets, one or more rules of the set of selection rules, and the first threshold value, the second threshold value; and enable user modification of at least one of the following: the set of users, the subset of users, the second authentication subset, the second code subset, the first threshold value, the second threshold value, value of an activation status of one or more rules of the set of selection rules, wherein each of the rules having the value of the activation status equal to one value is used for performing of the selecting operation, wherein each of the rules having the value of the activation status equal to another value is ignored when the selecting operation is being performed. This operation may be executed between execution of any consecutive operations of the process 500. It may be executed more than one time. Further it may be executed in parallel with any of the operations of the process 500. This user interface may enable interactive monitoring and control of a process for generation of the second accounts.

The operations 506, 508, 510, 512, 514 of the process 500 may be repeated until all first accounts assigned to the users the user are processed. Before each of the repetitions another additional operation is executed. The additional operation represents removing the second code subset from each of the first code subsets assigned to any of the users of the user subset. The removing enables excluding computer codes which are already assigned to the newly generated second accounts from further processing.

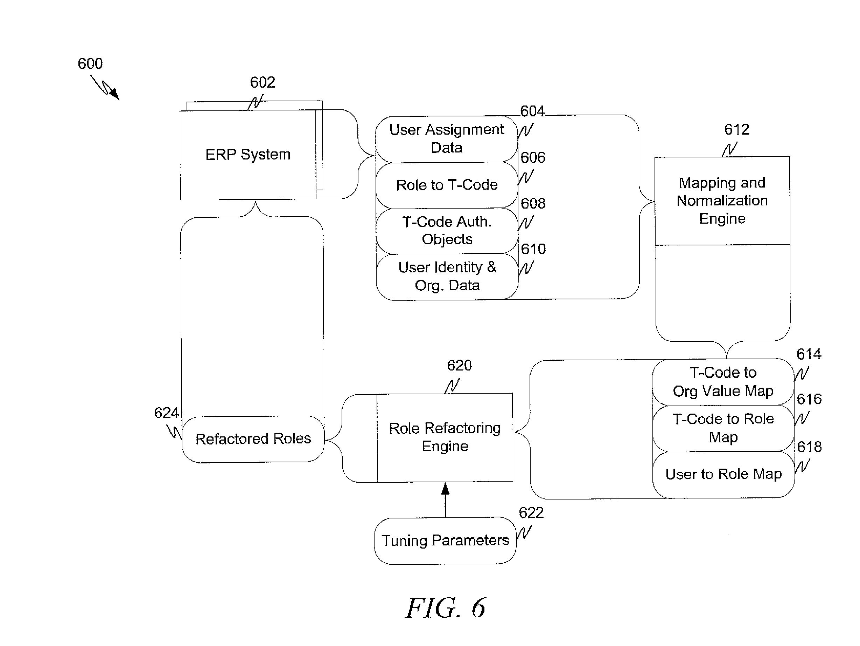

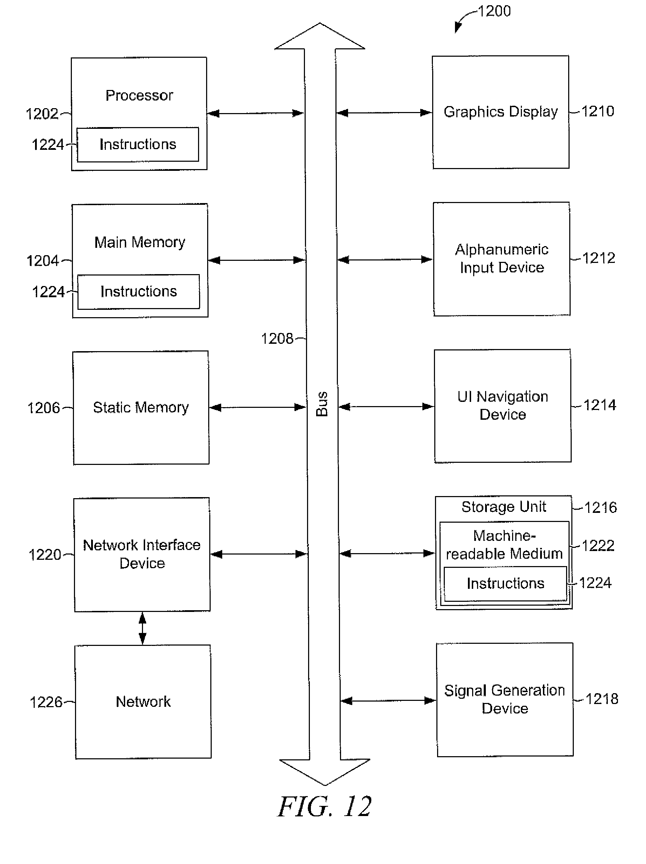

FIG. 6 illustrates various systems involved in an example role refactoring process along with representative inputs and outputs. The represented systems may be implemented using computer processing systems, including individual systems, networked systems, virtual systems, etc. as discussed in greater detail in conjunction with FIG. 12 below.

The representative systems, shown generally as 600, include ERP system(s) 602, mapping and normalization engine 612 and role refactoring engine 620. ERP systems 602 represent the sources of information that are fed into the role refactoring process. These can include ERP systems, line of business applications/systems, databases, etc. where information about the roles, with their accompanying transaction codes and authorization objects assigned to users, are stored as well as where information about organizational values are stored. As illustrated in FIG. 6, information extracted from these sources may include user assignment data 604, role to transaction code mapping 606, transaction code authorization objects 608 and user identity and organizational value data 610. User assignment data 604 is information that describes a user assigned to a role including, but not limited to, what organization values apply to a user such as geographic location, job title, what facility a user works in, which department a user works in, what group a user works in, roles assigned to a user, and so forth. Role to transaction code mapping 606 includes the transaction codes included in a given role. Transaction code authorization objects 608 include the authorization objects related to the transaction codes. User identity and organizational value data 610 includes organizational values such as how an organization is structured, which departments and/or groups are related to other departments and/or groups, and so forth.

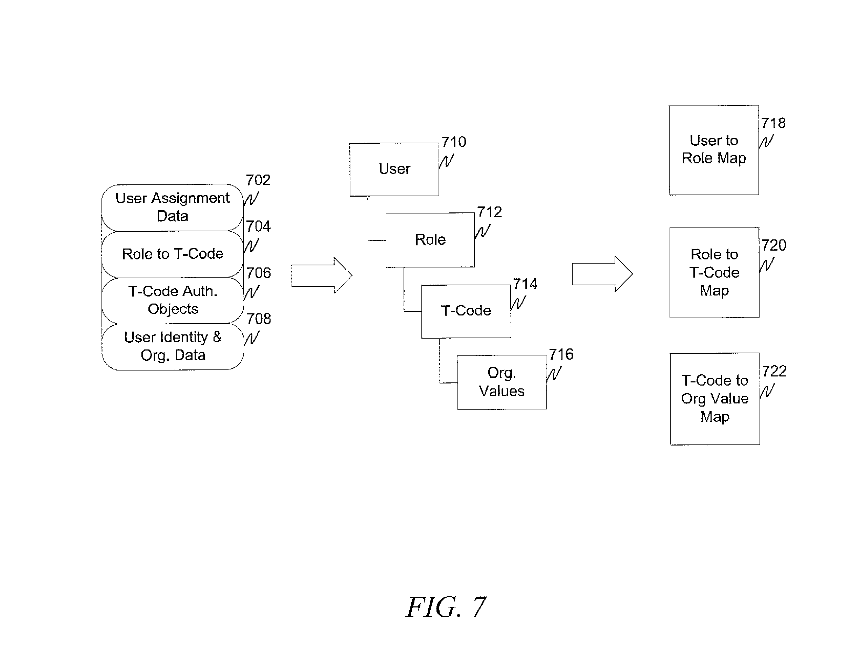

Mapping and normalization engine 612 receives the information collected from ERP system 602 and normalizes it and organizes it into a standardized format for further processing. Mapping and normalization engine 612 may be implemented in conjunction with one or more database management engines, such as those illustrated in FIG. 1 and/or FIG. 11 to take information in disparate formats, different terminology, etc. and place it into the standardized format, terminology, etc. for role refactoring. An example mapping is discussed below in conjunction with FIG. 7.

An example output of mapping and normalization engine 612 may include transaction code to organizational value map 614, transaction code to role map 616, and user to role map 618. Transaction code to organizational value map 614 includes a mapping of transaction codes to the organizational values as they exist within the extracted information. Transaction code to role map 616 includes a mapping of the roles as they exist within the extracted information and the transaction codes included within the roles. User to role map 618 includes users from the extracted information and the roles assigned to the users.

Role refactoring engine 620 takes transaction code to organizational value map 614, transaction code to role map 616 and user to role map 618 and produces refactored roles 624 in accordance with tuning parameters 622 as illustrated. The refactored roles 624 may then be assigned to users within ERP system 602.

FIG. 7 illustrates how representative inputs may be processed to create various maps that may be used in role refactoring. As discussed in FIG. 6, information describing the current roles, the current organizational values and current users are extracted from ERP systems and normalized into a common structure and various maps extracted from this common structure by a normalization and mapping engine. FIG. 7 illustrates how the extracted information may be mapped and normalized by such an engine.

In the example embodiment of FIG. 7, user assignment data 702, role to transaction code mapping 704, transaction code authorization objects 706 and user identity and organizational value information 708 represent the information extracted, for example, from the ERP system and other locations within the organization. As discussed in the example of FIG. 3, job based roles may be composite roles that include one or more other roles. Job based roles ultimately may be traced to a collection of transaction codes and associated authorization objects. Authorization objects generally include such items as data to be protected, authorization level, organizational values, and so forth as illustrated in the example of FIG. 2. Users also have associated organizational values based on job title, job function, work assignment location, and so forth. Thus, the collected information may be organized into a hierarchy where users 710 are assigned one or more job based roles 712. Job based roles 712 may include one or more transaction codes 714. Transaction codes 714 may include one or more organizational values 716.

The hierarchy of users 710, job based roles 712, transaction codes 714 and organizational values 716 may represent the normalized and organized information collected from the ERP system and/or other locations. From this hierarchy three mappings may be extracted. The first is the user to role map 718. This mapping plots users 710 on one axis and job based roles 712 on the other axis. An example user to role map is illustrated in Table 1 below. As illustrated, the mapping includes the users and their assigned roles. Table 1 illustrates only a few users and roles; however, in a typical system there may be hundreds or thousands of users and thousands of roles.

TABLE 1

|  | Role 1 | Role 2 | Role 3 | Role 4 | Role 5 | Role 6 |
|---|---|---|---|---|---|---|
| User 1 |  |  |  |  |  | X |
| User 2 |  |  | X | X |  |  |
| User 3 |  | X |  |  |  |  |
| User 4 |  |  |  | X | X |  |
| User 5 |  | X |  |  |  | X |

The next map is the role to transaction code map 720. This map is produced by plotting roles 712 on one axis and transaction codes 714 on the other axis. An example is illustrated in Table 2 below. Although Table 2 illustrates only a few roles and transaction codes, in a real system there would be hundreds or thousands of each.

TABLE 2

|  | T-Code 1 | T-Code 2 | T-Code 3 | T-Code 4 | T-Code 5 | T-Code 6 | T-Code 7 |
|---|---|---|---|---|---|---|---|
| Role 1 | X |  | X | X |  |  |  |
| Role 2 |  |  |  | X | X |  |  |
| Role 3 |  |  |  |  |  | X |  |
| Role 4 |  | X |  | X |  |  | X |
| Role 5 |  | X |  |  |  |  |  |
| Role 6 | X |  |  |  |  | X |  |

The final map is the transaction code to organizational value map 722. This map is produced by plotting transaction codes 714 on one axis and organizational values 716 on the other axis as illustrated in Table 3 example below. Although Table 3 includes only a few transaction codes and organizational values, in a real system there would be hundreds or thousands of each.

TABLE 3

|  | Org Val 1 | Org Val 2 | Org Val 3 | Org Val 4 | Org Val 5 |
|---|---|---|---|---|---|
| T-Code 1 | X |  |  |  |  |
| T-Code 2 |  | X |  | X |  |
| T-Code 3 |  |  | X |  |  |
| T-Code 4 |  |  | X |  |  |
| T-Code 5 | X | X |  |  |  |
| T-Code 6 |  |  |  |  | X |
| T-Code 7 |  |  |  | X |  |

The user to role map 718, role to transaction code map 720 and transaction code to organizational value map 722 may be used by a role refactoring engine to produce refactored task and enabler roles.

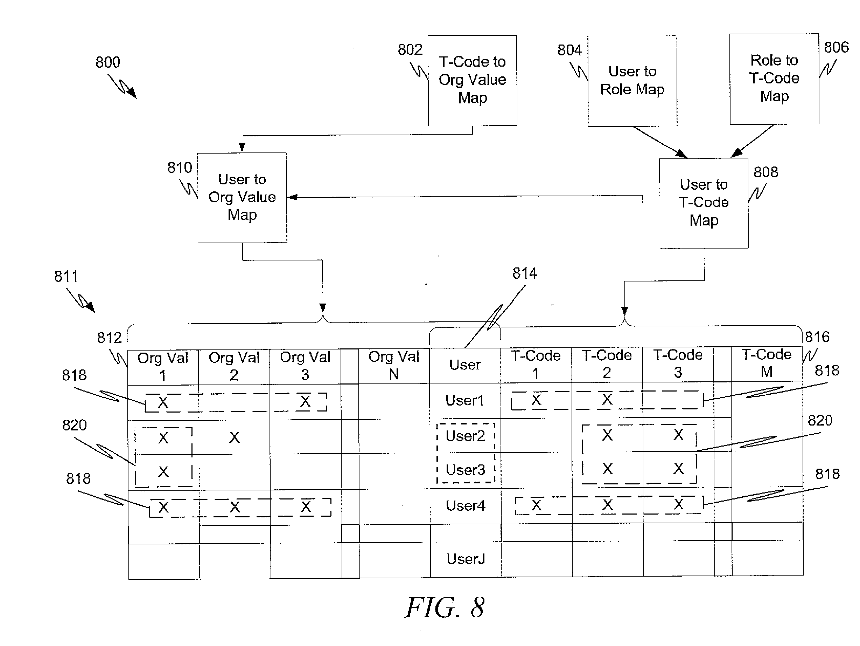

FIG. 8 illustrates a representative system to take maps and refactor them into task and enabler roles. The system, shown generally as 800, uses transaction code to organization value map 802, user to role map 804 and role to transaction code map 806 as inputs to create refactored roles. To create refactored task and enabler roles, an approach is to optimize the user-transaction code - organizational value mappings. FIG. 8 illustrates how this user - transaction code - organizational value mapping can be created.

As a first operation, the user to role map 804 and the role to transaction code map 806 can be used to create a user to transaction code map 808. This may be accomplished with matrix multiplication using Boolean operators. For example, Table 1 above is a representative user to role map and Table 2 above is a representative role to transaction code map. Replacing the "X" with '1' for true (blank for false) and using Boolean operators (AND in place of multiplication, OR in place of addition), standard matrix multiplication looks gives the following.

| User |  |  | Role |  |  |  |  | Role |  |  | T-Code |  |  |  |  |
|---|---|---|---|---|---|---|---|---|---|---|---|---|---|---|---|
| User | 1 | 2 | 3 | 4 | 5 | 6 |  | Role | 1 | 2 | 3 | 4 | 5 | 6 | 7 |
| 1 |  |  |  |  |  | 1 |  | 1 | 1 |  | 1 | 1 |  |  |  |
| 2 |  |  | 1 | 1 |  |  | X | 2 |  |  |  | 1 | 1 |  |  |
| 3 |  | 1 |  |  |  |  |  | 3 |  |  |  |  |  | 1 |  |
| 4 |  |  |  | 1 | 1 |  |  | 4 |  | 1 |  | 1 |  |  | 1 |

(continued)

| | Role | | | | | | | | | T-Code | | | | | | |
|---|---|---|---|---|---|---|---|---|---|---|---|---|---|---|---|---|
| User | 1 | 2 | 3 | 4 | 5 | 6 | | Role | 1 | 2 | 3 | 4 | 5 | 6 | 7 |
| 5 | | 1 | | | | 1 | | 5 | | 1 | | | | | |
| | | | | | | | | 6 | 1 | | | | | 1 | |

Which gives a user to transaction code mapping. The result of multiplying Table 1 and Table 2 is shown in Table 4.

TABLE 4

| | T-Code | | | | | | |
|---|---|---|---|---|---|---|---|
| User | 1 | 2 | 3 | 4 | 5 | 6 | 7 |
| 1 | 1 | | | | | 1 | |
| 2 | | 1 | 1 | 1 | | 1 | |
| 3 | | | | 1 | 1 | | |
| 4 | | 1 | | 1 | | | |
| 5 | 1 | | | 1 | 1 | 1 | |

This mapping can be multiplied by the transaction code to organizational value mapping to give a user to organizational value map 810. Multiplying Table 3 and Table 4 gives the result in Table 5.

TABLE 5

| | Organizational Value | | | | |
|---|---|---|---|---|---|
| User | 1 | 2 | 3 | 4 | 5 |
| 1 | 1 | | | | 1 |
| 2 | | 1 | 1 | 1 | 1 |
| 3 | 1 | 1 | 1 | | |
| 4 | | 1 | 1 | 1 | |
| 5 | 1 | 1 | 1 | | 1 |

The user to transaction code mapping can be joined with the user to organizational value mapping to yield a map that includes user to transaction code mapping and user to organizational value mapping. In this example, joining Table 4 with Table 5 gives the result of Table 6.

TABLE 6

| Organizational Value | | | | | | T-Code | | | | | | |
|---|---|---|---|---|---|---|---|---|---|---|---|---|---|
| 1 | 2 | 3 | 4 | 5 | User | 1 | 2 | 3 | 4 | 5 | 6 | 7 |
| 1 | | | | 1 | 1 | 1 | | | | | 1 | |
| | 1 | 1 | 1 | 1 | 2 | | 1 | | 1 | | 1 | |
| 1 | 1 | 1 | | | 3 | | | | 1 | 1 | | |
| | 1 | 1 | 1 | | 4 | | 1 | | 1 | | | |
| 1 | 1 | 1 | | 1 | 5 | 1 | | | 1 | 1 | 1 | |

Returning to FIG. 8, these operations are represented where user to role map 804 is multiplied by role to transaction code map 806 to give user to transaction code map 808. User to transaction code map 808 is multiplied by transaction code to organizational value map 802 to give user to organizational value map 810. User to organizational value map 810 is then joined to user to transaction code map 808 to produce the combined map shown generally as combined map 811.

Combined map 811 maps users 814 to organizational values 812 and to transaction codes 816. Combined map 811 may then be used to identify candidate task and enabler roles. Using the example in FIG. 8, user 2 and user 3 are both mapped to transaction code 2 and transaction code 3. User 2 and user 3 are also both mapped to organizational value 1. Thus, regions 820A-C may be created to map user 2 and user 3 to candidate task role 1 having transaction codes 2 and 3 and candidate enabler role 1 having organizational value 1. Similarly, regions 818 may be identified which map user1 and user 4 to candidate task role 2 having transaction codes 1, 2 and 3 and candidate enabler role 2 having organizational values 1, 2 and 3.

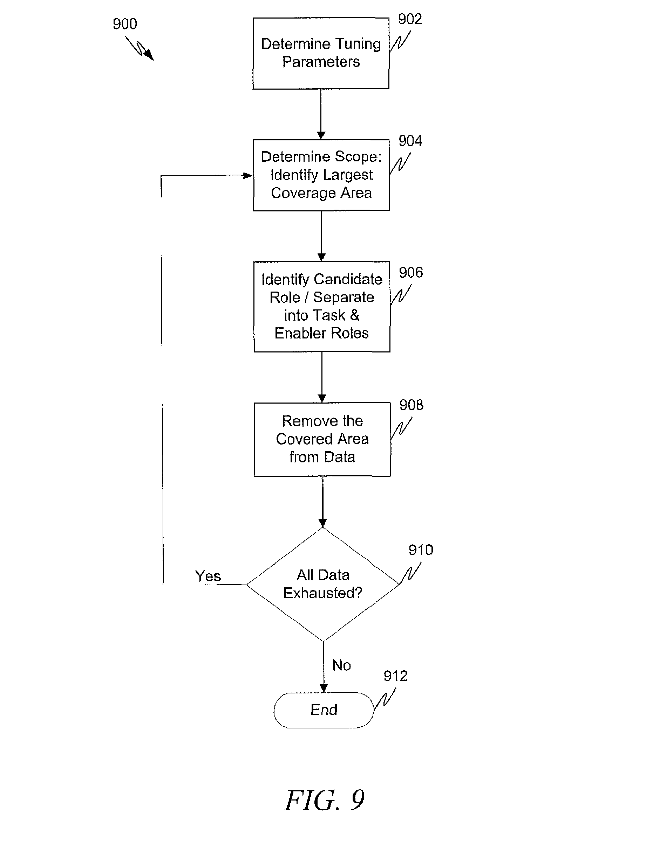

Fig. 8 illustrates an example of the relationship data 811 comprising relationship information between a set 814 of the users, a set of 816 the computer codes, and a set 812 of the authentication values, the relationship information identifying which first code subset of the set of computer codes and which first authentication subset of the set of the authentication values are assigned to each user of the set of the users. For instance, a code subset comprising "T-Code 1," "T-Code 2," and "T-Code 3" and a authentication subset comprising "Org Val 1" and "Org Val 3" are assigned to "User 1" of set of the Users. A code subset comprising "T-Code 2," and "T-Code 3" and a authentication subset comprising "Org Val 1" and "Org Val 2" are assigned to "User 2" of set of the Users. Execution of the above described selecting operation may result in a selection of the user subset comprising "User 1" and "User 2", the second code subset comprising "T-Code 2", and second authentication subset comprising "Org Val 1", because the selected subsets comply with the set of selection rules mentioned above. The second code subset ("T-Code 2") is comprised in a first code subset ("T-Code 2" and "T-Code 3") assigned to each of the users of the user subset ("User2" and "User3"). The second authentication subset ("Org Val 1") is comprised in a first code subset ("Org Val 1" and "Org Val 2") assigned to the user "User 2" of the user subset ("User2" and "User3"). When set of the set of selection rules further comprises another rule: the users of the user subset and the computer codes of the second code subset are selected in a way enabling maximization of a product of a number of the computer codes in the second code subset and a number of the users in the user subset, then three alternative second code subsets and three alternative user subsets may be selected using an example data depicted on the Fig. 9. As a first variant a second code subset ("T-Code 2" and "T-Code 3") and a user subset ("User2" and "User3") may be selected because the product equals to 4 in this case. As second variant another second code subset ("T-Code 1" and "T-Code 2") and another user subset ("User1" and "User4") may be selected because the product equals to 4 in this case as well. As a third variant yet another second code subset ("T-Code 2") and yet another user subset ("User1," "User2," "User3," and "User4") may be selected because the product equals to 4 in this case as well.

The set of selection rules may further comprise another rule: the users of the user subset and the computer codes of the second code subset are selected in a way that a code association value for at least one of the users of the user subset is bigger than a first threshold value, wherein the code association value for each of the users of the user subset is equal to a ratio of the number of the computer codes in the second code subset and a number of the computer codes in the first code subset assigned to the each of the users of the user subset. If the threshold value equals to 2, then the third variant is selected using the example data depicted on the Fig. 8, because a respective second authentication subset ("Org Val 1," "Org Val 2," and "Org Val 3") comprises 3 authentication values and is comprised in the first authentication subset of "User 4" subsets can be selected. When the third variant is selected then a correction of assignment of the authentication values for other users might be needed. All authentication values of the second authentication subset which are not yet assigned to any of the users of the user subset might have to be assigned to the any of the users of the user subset. In this example the first authentication subset ("Org Val 1," "Org Val 2," and "Org Val 3") might be assigned to all users of the user subset ("User1," "User2," "User3," and "User4"). If the threshold value equals to 1 or 0, then selection of the subsets of the first, the second, and the third variant mentioned in the previous paragraph is possible, wherein correction of assignment of the authentication values might be needed as described above.

The rule "the second authentication subset is comprised in one of the first authentication subsets assigned to one of the users of the user subset" may be further substituted buy another rule "the second authentication subset is comprised in each the first authentication subsets assigned to any of the respective users of the user subset" in the set of selection rule. In this case, when either the first of the second variant is selected then a respective authentication set comprising "Org Val 1" is selected; when the second variant is selected then a respective authentication set comprising at least one of "Org Val 1" or "Org Val 3" is selected.

The set of selection rules may further comprise another rule: the user subset and the second authentication subset are selected in a way that an authentication association value for at least one of the users of the user subset having the assigned first authentication subset comprising the second authentication subset is bigger than a second threshold value, wherein the authentication association value for each of the users having the assigned first authentication subset comprising the second authentication subset equals to a ratio of a number of the authentication values in the second authentication subset and a number of the authentication values in the first authentication subset assigned to the each of the users having the assigned first authentication subset comprising the second authentication subset.

The rule "the second authentication subset is comprised in one of the first authentication subsets assigned to one of the users of the user subset" may be further substituted buy another rule "the second authentication subset comprises any of the authentication values comprised in any of the first authentication subsets assigned to any of the respective users of the user subset" in the set of selection rule. In this case the second authentication subset comprises "Org Val 1," "Org Val 2," and "Org Val 3" for the first, the second, and the third variants mentioned above. Further, a correction of assignment of the authentication values for other users might be needed. All authentication values of the second authentication subset which are not yet assigned to any of the users of the user subset might have to be assigned to the any of the users of the user subset. In this example the first authentication subset ("Org Val 1," "Org Val 2," and "Org Val 3") might be assigned to all users of the user subset ("User1" "User2," "User3," and "User4").

Some of the rules mentioned above may be translated in formulas of statistical metrics mentioned below.

FIG. 9 is a process diagram illustrating a representative role refactoring process, shown generally as 900. The tuning parameters are acquired in operation 902. Tuning parameters influence the role refactoring process and allow a user to match the role refactoring algorithm to a particular corporate structure used in an organization, a particular strategy for role refactoring, determine the correlation between the new refactored roles and the old roles, etc. In short, the tuning parameters and partitions allow the algorithm to be matched to particular role refactoring objectives.

One set of tuning parameters may comprise scope and constraints. Scope means the selection criteria used to define the users, business processes, organizations, or other selection criteria for determining the possible roles to be refactored. Constraints are used to ensure that organization, geographic, company or other boundary conditions are applied to the candidate roles. An example may be that candidate role 1 applies to users in department A and B but not C. Thus no users from department C should be assigned to candidate role 1. Scope and/or constraint may be expressed by a set of organizational values and criteria that are applied to partition and factor roles in conjunction with the organizational values. By way of example, and not limitation, perhaps an organization would like to factor enabler roles along geographic boundaries. Thus, the joined organizational value - user - transaction code map may be filtered by organizational value(s) that describe geographic boundaries so that enabler roles will be assigned by geographic boundary. As yet another example, perhaps an organization would like to factor enabler roles by job title as well as facility location. The joined organizational value - user - transaction code map may be filtered by organizational values that describe job title and facility location so that enabler roles will be assigned by these organizational values. This filtering may also be described as a partitioning of the map.

Tuning parameters may also include statistical properties that define the resulting set of candidate roles. These statistical properties may compare various parameters between the old job based role mapping and the proposed candidate task and enabler role mappings. By way of example, such statistical measures may include those listed below.

1. Quality: a calculated value that determines the quality of the candidate role based on the number of assigned users, number of organizational values, and the coverage area (e.g., number of assigned users and number of assigned roles and/or objects).Examples of statistical metrics that can determine quality include the following.

$$Coverage\ Area\ =\ \#users\ *\ \#roles$$

$$\%Role\ Efficiency\ =\ \%\frac{active\ permissions}{total\ Permissoins}$$

$$\%Constraint\ Analysis =\ \%\frac{number\ of\ users\ with\ onstraints}{total\ assigned\ users}$$

$$Cost\ Analysis\ =\ number\ of\ user\ changes\ *\ \cos t\ perchange$$

The above statistical values can be combined using weighted average or other methods to provide a relative quality value of the candidate role. As one example, overall quality may be calculated by:

$$Quality = (CoverageArea * \%Role\ Efficiency * (1\text{-}\%Constraint\ Analysis))/CostAnalysis$$

2. Consistency: a measure of the similarity of the users and/or roles proposed in the candidate role. Consistency may be measured, for example, using one of the equations below, depending on whether you are measuring the consistency of roles or permissions.

$$Consistency = \frac{total\ number\ of\ shared\ roles}{total\ number\ of\ shared\ roles\ assigned\ to\ each\ user}$$

$$Consistency = \frac{total\ number\ of\ permissions}{total\ number\ of\ shared\ permissions\ assigned\ to\ each\ role}$$

Consistency is a measure of the role assignments by user and organizational attributes.

3. Precision: a measure of how the resulting set of roles compares with the original user to permissions assignments. Precision may be calculated based on the difference in percent between the user to permission assignment vs, the proposed candidate permission assignment.

$$Precision = \#\frac{assignment\ differences}{total\ number\ of\ assignments}$$

The statistical tuning parameters may be evaluated as candidate roles are selected, after a set of candidate roles are selected, after all candidate roles are selected, or some combination thereof.

After the tuning parameters are identified, the scope and boundary conditions are applied and the largest covered area within the map may be identified as indicated by operation 904. Various algorithms may be used to identify the largest covered area. For example, a minimum tiling algorithm such as the that described by J. Vaidya, V. Atluri, and Q. Gwo, "The Role Mining Problem: Finding a Minimum Descriptive Set of Roles," in Proc. ACM SACMAT, pp. 175-184, 2007, incorporated herein by reference or through approximation of clique and biclique problems as described by D.S. Holchbaum, "Approximating Clique and BicliqueProblems," Journal on Algorithms, 29, pp. 174-200, 1998, incorporated herein by reference may be applied. Algorithms like that described in conjunction with FIG. 8 may also be applied which identifies largest remaining uncovered areas.

From the identified covered regions, the next set of candidate task and enabler roles may be identified as indicated by operation 906. An example was described in conjunction with FIG. 8 above. Note that the candidate task and enabler roles may be identified separately as the method proceeds, or they may be separated out after all candidate roles have been identified (e.g., after the operation 904, 906, 908 loop is complete).

Operation 908 removes the covered area used to construct the last set of candidate task and enabler roles from consideration. Test operation 910 determines whether data remains that should be factored. If so, execution proceeds from operation 904 to identify the next largest remaining area that can be covered. When the data is exhausted, the refactoring of candidate roles is complete.

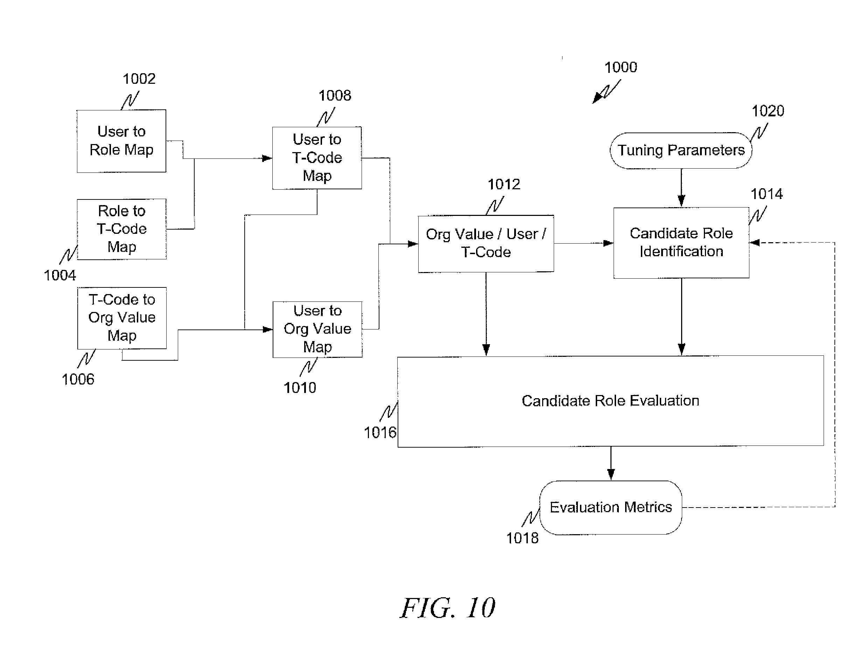

FIG. 10 illustrates a representative role evaluation system. The system, shown generally as 1000, may comprise mechanisms to create the combined organizational value - user - transaction code map 1012. As indicated, map 1012 may be created by combining the user to role map 1002 with the role to transaction code map 1004 to produce the user to transaction code map 1008. The user to transaction code map 1008 may be combined with the transaction code to organizational value map 1006 to produce user to organizational value map 1010. The user to transaction code map 1008 may then be joined to the user to organizational value map 1010 to produce the organizational value - user - transaction code map 1012.

Candidate task and enabler roles may then be identified in accordance with tuning parameters 1020 as indicated by operation 1014. Identification of candidate task and enabler roles has been previously discussed.

Candidate task and enabler roles may be evaluated for compliance with the statistical tuning metrics and/or other criteria in operation 1016. As previously discussed, such criteria may include goodness, precision, consistency and/or some combination thereof. The evaluation metrics 1018 may then be combined with the list of candidate roles.

Evaluation metrics 1018 may be produced as each candidate role is identified, as a set of candidate roles are identified, after all candidate roles are identified, and/or some combination thereof. Different metrics may also be produced at different times. For example, the precision criteria may be calculated as each candidate role is identified while the consistency criteria may be calculated after all candidate roles have been identified.

The evaluation metrics 1018 and candidate roles may provide the basis for further role optimization of the candidate roles. This is indicated by the dashed line running from the evaluation metrics 1018 to the candidate role identification operation 1014.

FIG. 11 illustrates use of an in-memory database in one of two configurations (shown generally as 1100) in conjunction with the methodologies discussed herein. Since the refactoring process may deal with very large tables with thousands, tens of thousands or hundreds of thousands of entries, implementations that use database systems to handle the tables and implement the described methods may benefit from in-memory database technology. One example of a suitable in-memory database is the HANA in-memory database system available from SAP AG of Walldorf, Germany. In-memory database systems do not necessarily always maintain all data within memory at all times, but the relevant data is in memory when it needs to be and many fold improvements are seen using these systems over traditional disk based systems.

Like the HANA in-memory database system, the system of FIG. 11 illustrates two separate deployments, a side-by-side deployment where the in-memory database is deployed in conjunction with a traditional disk based database system and a stand alone deployment where the in-memory database system is deployed without a traditional disk based database system. Thus not every component illustrated in FIG. 11 may be provided for every specific embodiment.

The embodiment of FIG. 11 may represent a side-by-side deployment where an in-memory database is deployed on a side of a standard database management system. This may have several benefits, including acceleration of data read and/or writes. A side-by-side type of deployment may also allow acceleration without substantial changes in the existing deployment infrastructure or technologies. In one type of side-by-side deployment, reads and/or writes that would normally be directed to the traditional database are handled by the in-memory database instead. The in-memory database may interact with database management system 1116 and/or database 1118.

Such a side-by-side deployment may include presentation layer 1102, application layer 1104, database management system 1116, database 1118 and in-memory database system 1134, possibly deployed in either the same application layer (e.g., 1104) or a different application layer (e.g., 1122). An application layer may comprise presentation components (e.g., 1106, 1124). Presentation components may include components such as screen interpreter(s), interfaces, dialog control, etc. An application layer may also comprise kernel and services (e.g., 1114, 1132). Kernel and services may include components such as an interpreter and/or other components that implement the runtime environment. An application layer may also comprise tools (e.g., 1108, 1126) and/or applications (e.g., 1112, 1130). An application layer may also comprise a data dictionary (e.g., 1110, 1128) to provide information, data structures, definitions, etc. in a database independent format.

FIG. 11 may also illustrate a stand alone deployment where an in-memory database runs in the application layer along with any applications and/or tools. In this type of deployment, presentation layer 1120 supports application layer 1122. In-memory database system 1134 provides the database support. The other components (e.g., presentation layer 1102, application layer 1104, database management system 1116 and database 1118) do not exist in a stand alone deployment.

FIG. 12 is a block diagram of a computer processing system 1200, within which a set of instructions 1224 for causing the computer to perform any one or more of the methodologies discussed herein, may be executed.

In addition to being sold or licensed via traditional channels, embodiments may also, for example, be deployed by Software-as-a-Service (SaaS), Application Service Provider (ASP), or utility computing providers. The computer may be a server computer, a personal computer (PC), a tablet PC, a set-top box (STB), a personal digital assistant (PDA), cellular telephone, or any processing device capable of executing a set of instructions 1224 (sequential or otherwise) that specify actions to be taken by that device. Further, while only a single computer is illustrated, the term "computer" shall also be taken to include any collection of computers that individually or jointly execute a set (or multiple sets) of instructions 1224 to perform any one or more of the methodologies discussed herein.

The example computer processing system 1200 includes a processor 1202 (e.g., a central processing unit (CPU), a graphics processing unit (GPU), advanced processing unit (APU) or some combination thereof), a main memory 1204 and static memory 1206, which may communicate with each other via a bus 1208. The computer processing system 1200 may further include a graphics display 1210 (e.g., a plasma display, a liquid crystal display (LCD) or a cathode ray tube (CRT) or other display). The processing system 1200 may also include an alphanumeric input device 1212 (e.g., a keyboard), a user interface (UI) navigation device 1214 (e.g., a mouse, touch screen, or the like), a storage unit 1216, a signal generation device 1218 (e.g., a speaker), and/or a network interface device 1220.

The storage unit 1216 includes machine-readable medium 1222 on which is stored one or more sets of data structures and instructions 1224 (e.g., software) embodying or utilized by any one or more of the methodologies or functions described herein. The instructions 1224 may also reside, completely or at least partially, within the main memory

EP 2 849 114 B1

1204 and/or within the processor 1202 during execution thereof by the computer processing system 1200, with the main memory 1204 and the processor 1202 also constituting computer-readable, tangible media.

The instructions 1224 may be transmitted or received over a network 1226 via a network interface device 1220 utilizing any one of a number of well-known transfer protocols (e.g., HTTP).

While the machine-readable medium 1222 is shown in an example embodiment to be a single medium, the term "machine-readable medium" should be taken to include a single medium or multiple media (e.g., a centralized or distributed database, and/or associated caches and servers) that store the one or more sets of instructions 1224. The term "machine-readable medium" shall also be taken to include any medium that is capable of storing, encoding or carrying a set of instructions 1224 for execution by the computer and that cause the computer to perform any one or more of the methodologies of the present application, or that is capable of storing, encoding or carrying data structures utilized by or associated with such a set of instructions 1224. The term "machine-readable medium" shall accordingly be taken to include, but not be limited to, solid-state memories, and optical and magnetic media.The term "machine-readable storage medium" does not include signals or other intangible mechanisms. Such intangible media will be referred to as "machine-readable signal media." The term "machine-readable media" will encompass both "machine-readable storage media" and "machine-readable signal media."

While various implementations and exploitations are described, it will be understood that these embodiments are illustrative and that the scope of the claims is not limited to them. In general, techniques for maintaining consistency between data structures may be implemented with facilities consistent with any hardware system or hardware systems defined herein. Many variations, modifications, additions, and improvements are possible.

While the embodiments are described with reference to various implementations and exploitations, it will be understood that these embodiments are illustrative, and that the scope of claims provided below is not limited to the embodiments described herein. In general, the techniques described herein may be implemented with facilities consistent with any hardware system or hardware systems defined herein. Many variations, modifications, additions, and improvements are possible.

The term "computer readable medium" is used generally to refer to media embodied as non-transitory subject matter, such as main memory, secondary memory, removable storage, hard disks, flash memory, disk drive memory, CD-ROM and other forms of persistent memory. It should be noted that program storage devices, as may be used to describe storage devices containing executable computer code for operating various methods, should not be construed to cover transitory subject matter, such as carrier waves or signals. "Program storage devices" and "computer-readable medium" are terms used generally to refer to media such as main memory, secondary memory, removable storage disks, hard disk drives, and other tangible storage devices or components.

Plural instances may be provided for components, operations, or structures described herein as a single instance. Finally, boundaries between various components, operations, and data stores are somewhat arbitrary, and particular operations are illustrated in the context of specific illustrative configurations. Other allocations of functionality are envisioned and may fall within the scope of the claims. In general, structures and functionality presented as separate components in the exemplary configurations may be implemented as a combined structure or component. Similarly, structures and functionality presented as a single component may be implemented as separate components. These and other variations, modifications, additions, and improvements fall within the scope of the claims and their equivalents.

**Claims**

1. A computer implemented method for management of first accounts (406) of users (404) on computer systems (1200) communicatively coupled with each other by one or more computer networks (1226), wherein each of the users has at least one assigned first account on at least one of the computer systems, wherein each of the users of at least a portion of the users has more than one assigned first account on at least one of the computer systems, wherein each of the first accounts has one or more assigned authentication values (409) and one or more assigned computer codes (408) which execution is enabled for the user having the each of the first accounts after his authentication using the one or more assigned authentication values is performed on the respective computer system that has that first account, wherein the authentication values and the computer codes are stored across the computer systems, the method comprising:

    obtaining, using at least one processor of one of the computer systems, from the first accounts on the computer systems relationship data (811) comprising relationship information between a set (814) of the users, a set of (816) the computer codes, and a set (812) of the authentication values, the relationship information identifying which first code subset of the set of computer codes and which first authentication subset of the set of the authentication values are assigned to each user of the set of the users (502, 504);
    selecting, using the at least one processor, a user subset (404) of the set of users, a second code subset (410)

17

of the set of computer codes, and a second authentication subset (412) of the set of the authentication values, wherein the user subset, the second code subset, and the second authentication subset are selected according to a set of selection rules comprising the following rules:

the second code subset is comprised in each of the first code subsets assigned to any of the respective users of the user subset,

the user subset comprises more than one user, and

the second authentication subset is comprised in one of the first authentication subsets assigned to one of the users of the user subset (506, 508, 510); and

generating, using the at least one processor, a second account for the each of the users of the user subset, wherein the second authentication subset and the second code subset are assigned to the second account, wherein execution of any of the computer codes of the second code subset is enabled for the each of the users of the user subset after his authentication is performed on the one of the computer systems using the second authentication subset (512).

2. The method of claim 1, wherein said computer systems and said computer networks are comprised in a computer cloud, wherein the authentication values and the computer codes are stored across the computer systems in the computer cloud.

3. The method of any one of the preceding claims, further comprising:

deassigning, using the at least one processor, all of the computer codes of the of the second code set from all of the first accounts associated with any of the users of the user subset (514); and

deleting, using the at least one processor, each of the first accounts, when the each of the first accounts has no assigned computer codes (514).

4. The method of any one of the preceding claims, wherein the set of the users comprises all of the users having at least one assigned first account.

5. The method of any one of the preceding claims, wherein the set of selection rules further comprises another rule: the users of the user subset and the computer codes of the second code subset are selected in a way enabling maximization of a product of a number of the computer codes in the second code subset and a number of the users in the user subset.

6. The method of any one of the preceding claims, wherein the set of selection rules further comprises another rule: the users of the user subset and the computer codes of the second code subset are selected in a way that a code association value for at least one of the users of the user subset is bigger than a first threshold value, wherein the code association value for each of the users of the user subset is equal to a ratio of the number of the computer codes in the second code subset and a number of the computer codes in the first code subset assigned to the each of the users of the user subset.

7. The method of any one of the preceding claims, wherein the set of the selection rules further comprises another rule: the second authentication subset is further comprised in each of the first authentication subsets assigned to any of the users of the user subset except the one of the users of the user subset having the assigned first authentication subset comprising the second authentication subset.

8. The method of any one of the preceding claims, wherein the set of the selection rules further comprises another rule:

the user subset and the second authentication subset are selected in a way that an authentication association value for at least one of the users of the user subset having the assigned first authentication subset comprising the second authentication subset is bigger than a second threshold value, wherein the authentication association value for each of the users having the assigned first authentication subset comprising the second authentication subset equals to a ratio of a number of the authentication values in the second authentication subset and a number of the authentication values in the first authentication subset assigned to the each of the users having the assigned first authentication subset comprising the second authentication subset.

9. The method of any one of the preceding claims, wherein the selecting further comprises selecting a third authentication subset, wherein the third authentication subset comprises all of the authentication values of all of the first authentication subsets assigned to the users of the user subset which are not comprised into the second authentication subset, wherein the third authentication subset is assigned to the second account and execution of any of the computer codes of the second code subset is enabled for the each of the users of the user subset after his authentication is performed on the one of the computer systems using the second and the third authentication subset.

10. The method of any one of the preceding claims, further comprising:

removing, using the at least one processor, the second code subset from each of the first code subsets assigned to any of the users of the user subset; and
repeating of performing of the selecting and the generating operation after performing of the removing operation.

11. The method of any one of the preceding claims wherein each of the first authentication subsets comprise at least one of the following authentication values: one or more attributes related to computer security, a business area, a location, a plant, a job function, a job title, a personnel area, an employee group, or an employee subgroup.

12. The method one of the preceding claims further comprising:

presenting, using the at least one processor, a user interface to a user on the one of the computer systems, wherein the user interface is configured to:

present at least one of the following: at least a portion of the relationship data, at least a portion the set of the authentication values, at least a portion the set of the computer codes, at least a portion the set of users, at least a portion of each of the first code subsets, at least a portion of each of the first authentication subsets, at least a portion of the user subset, at least a portion of each of the second authentication subsets, at least a portion of each of the second code subsets, one or more rules of the set of selection rules, and the first threshold value, the second threshold value; and
enable user modification of at least one of the following: the set of users, the subset of users, the second authentication subset, the second code subset, the first threshold value, the second threshold value, value of an activation status of one or more rules of the set of selection rules, wherein each of the rules having the value of the activation status equal to one value is used for performing of the selecting operation, wherein each of the rules having the value of the activation status equal to another value is ignored when the selecting operation is being performed.

13. A computer system (1226) comprising:

a memory;
a computer processor coupled to the memory;
instructions stored in the memory and executable by the processor,
wherein the computer system is configured to communicate with other computer systems via one or more computer networks (1226), wherein each of users (404) has at least one assigned first account (406) on at least one of the computer systems, wherein each of the users of at least a portion of the users has more than one assigned first account on at least one of the computer systems, wherein each of the first accounts has one or more assigned authentication values (409) and one or more assigned computer codes (408) which execution is enabled for the user having the each of the first accounts after his authentication using the one or more assigned authentication values is performed on the respective computer system that has that first account, wherein the authentication values and the computer codes are stored across the computer systems,
execution of the instructions configuring the system to:

obtain from the first accounts on the computer systems relationship data (811) comprising relationship information between a set (814) of the users, a set (816) of the computer codes, and a set of the authentication (812) values, the relationship information identifying which first code subset of the set of computer codes and which first authentication subset of the set of the authentication values are assigned to each user of the set of the users;
select a user subset (404) of the set of users, a second code subset (410) of the set of computer codes, and a second authentication subset (412) of the set of the authentication values, wherein the user subset, the second code subset, and the second authentication subset are selected according to a set of selection rules comprising the following rules:

the second code subset is comprised in each of the first code subsets assigned to any of the respective users of the user subset,

the user subset comprises more than one user, and

the second authentication subset is comprised in one of the first authentication subsets assigned to one of the users of the user subset; and

generate, using the at least one processor, a second account for the each of the users of the user subset, wherein the second authentication subset and the second code subset are assigned to the second account, wherein execution of any of the computer codes of the second code subset is enabled for the each of the users of the user subset after his authentication is performed on the one of the computer systems using the second authentication subset.

14. The system of claim 13, wherein the execution of the instructions further configures the system to:

deassign all of the computer codes of the of the second code set from all of the first accounts associated with any of the users of the user subset; and

delete each of the first accounts, when the each of the first accounts has no assigned computer codes.

15. The system of any one of the preceding claims 13 or 14, wherein the set of the users comprises all of the users having at least one assigned first account.

16. The system of any one of the preceding claims 13-15, wherein the set of the selection rules further comprises another rule: the users of the user subset and the computer codes of the second code subset are selected in a way enabling maximization of a product of a number of the computer codes in the second code subset and a number of the users in the user subset.

17. The system of any one of the preceding claims 13-16, wherein the execution of the instructions further configures the system to:

remove the second code subset from each of the first code subsets assigned to any of the users of the user subset; and

repeat of performing of the selecting and the generating operation after performing of the removing.

18. The system of any one of the preceding claims 13-17, wherein each of the first authentication subsets comprise at least one of the following authentication values: one or more attributes related to computer security, a business area, a location, a plant, a job function, a job title, a personnel area, an employee group, or an employee subgroup.

19. The system of any one of the preceding claims 13-18 further comprising:

a user interface (1212, 1214, 1210), wherein the execution of the instructions further configure the system to perform the following via the user interface:

present at least one of the following: at least a portion of the relationship data, at least a portion the set of the authentication values, at least a portion the set of the computer codes, at least a portion the set of users, at least a portion of each of the first code subsets, at least a portion of each of the first authentication subsets, at least a portion of the user subset, at least a portion of each of the second authentication subsets, at least a portion of each of the second code subsets, one or more rules of the set of selection rules, and the first threshold value, the second threshold value; and

enable user modification of at least one of the following: the first threshold value, the second threshold value, value of an activation status of one or more rules of the set of selection rules, wherein each of the rules having the value of the activation status equal to one value is used for performing of the selecting operation, wherein each of the rules having the value of the activation status equal to another value is ignored when the selecting operation is being performed.

20. A computer readable medium having stored thereon computer executable code for execution by a micro-processor controlling a computer system, wherein execution of the instructions of the executable code cause the microprocessor to execute a computer-implemented method according to any one of claims 1-12.

**Patentansprüche**

1. Computerimplementiertes Verfahren zur Verwaltung erster Konten (406) von Nutzern (404) auf Computersystemen (1200), die über ein oder mehrere Computernetze (1226) kommunikativ miteinander verbunden sind, wobei jedem von den Nutzern mindestens ein erstes Konto auf mindestens einem der Computersysteme zugewiesen ist, wobei jedem Nutzer von zumindest einem Teil der Nutzer mehr als ein erstes Konto auf mindestens einem von den Computersystemen zugewiesen ist, wobei jedem von den ersten Konten ein oder mehrere Authentifizierungswerte (409) zugewiesen sind und ein oder mehrere Computercodes (408) zugewiesen sind, deren Ausführung für den Nutzer, der jeweils die ersten Konten hat, zugelassen wird, nachdem er sich unter Verwendung des einen oder der mehreren zugewiesenen Authentifizierungswerte an dem jeweiligen Computersystem, welches das erste Konto aufweist, authentifiziert hat, wobei die Authentifizierungswerte und die Computercodes über den Computersystemen gespeichert werden, wobei das Verfahren umfasst:

   Abfragen von Beziehungsdaten (811), die Informationen über Beziehungen zwischen einer Menge (814) der Nutzer, einer Menge (816) der Computercodes und einer Menge (812) der Authentifizierungswerte umfassen, von den ersten Konten auf den Computersystemen unter Verwendung mindestens eines Prozessors von einem der Computersysteme, wobei die Beziehungsinformationen angeben, welche erste Code-Untermenge von der Menge von Computercodes und welche erste Authentifizierungs-Untermenge von der Menge der Authentifizierungswerte den einzelnen Nutzern aus der Menge der Nutzer (502, 504) zugewiesen sind;
   Auswählen einer Nutzer-Untermenge (404) aus der Menge der Nutzer, einer zweiten Code-Untermenge (410) aus der Menge von Computercodes und einer zweiten Authentifizierungs-Untermenge (412) aus der Menge der Authentifizierungswerte unter Verwendung des mindestens einen Prozessors, wobei die Nutzer-Untermenge, die zweite Code-Untermenge und die zweite Authentifizierungs-Untermenge gemäß einer Menge von Auswahlregeln ausgewählt werden, welche die folgenden Regeln umfassen:

      die zweite Code-Untermenge ist in jeder von den ersten Code-Untermengen enthalten, die den jeweiligen Nutzern aus der Nutzer-Untermenge zugewiesen sind,
      die Nutzer-Untermenge umfasst mehr als einen Nutzer und
      die zweite Authentifizierungs-Untermenge ist in einer der ersten Authentifizierungs-Untermengen enthalten, die einem der Nutzer aus der Nutzer-Untermenge (506, 508, 510) zugewiesen sind; und
      Erzeugen eines zweiten Kontos für die einzelnen Nutzer aus der Nutzer-Untermenge unter Verwendung des mindestens einen Prozessors, wobei die zweite Authentifizierungs-Untermenge und die zweite Code-Untermenge dem zweiten Konto zugewiesen werden, wobei die Ausführung der Computer-Codes der zweiten Computer-Untermenge für jeden der Nutzer aus der Nutzer-Untermenge zugelassen wird, nachdem seine Authentifizierung an dem einen von den Computersystemen unter Verwendung der zweiten Authentifizierungs-Untermenge (512) durchgeführt worden ist.

2. Verfahren nach Anspruch 1, wobei die Computersysteme und die Computernetze in einer Computer-Cloud enthalten sind, wobei die Authentifizierungswerte und die Computer-Codes über den Computersystemen in der Computer-Cloud gespeichert sind.

3. Verfahren nach einem der vorangehenden Ansprüche, ferner umfassend:

   Aufheben der Zuordnung sämtlicher Computer-Codes der zweiten Code-Menge zu allen ersten Konten, die mit einem der Nutzer aus der Nutzer-Untermenge (514) assoziiert sind, unter Verwendung des mindestens einen Prozessors; und
   Löschen jedes der ersten Konten unter Verwendung des mindestens einen Prozessors, wenn den einzelnen ersten Konten keine Computer-Codes (514) zugewiesen worden sind.

4. Verfahren nach einem der vorangehenden Ansprüche, wobei die Menge der Nutzer alle Nutzer umfasst, denen mindestens ein erstes Konto zugewiesen worden ist.

5. Verfahren nach einem der vorangehenden Ansprüche, wobei die Menge der Auswahlregeln ferner eine andere Regel umfasst: die Nutzer aus der Nutzer-Untermenge und die Computer-Codes der zweiten Code-Untermenge werden auf eine Weise ausgewählt, die eine Maximierung eines Produkts einer Anzahl der Computer-Codes in der zweiten Code-Untermenge und einer Anzahl der Nutzer in der Nutzer-Untermenge ermöglicht.

6. Verfahren nach einem der vorangehenden Ansprüche, wobei die Menge der Auswahlregeln ferner eine andere Regel umfasst: die Nutzer der Nutzer-Untermenge und die Computer-Codes der zweiten Code-Untermenge werden auf eine Weise ausgewählt, dass ein Code-Zuweisungswert für mindestens einen von den Nutzern aus der Nutzer-Untermenge größer ist als ein erster Schwellenwert, wobei der Code-Zuweisungswert für jeden von den Nutzern aus der Nutzer-Untermenge einem Verhältnis der Anzahl der Computer-Codes in der zweiten Code-Untermenge und einer Anzahl der Computer-Codes in der ersten Code-Untermenge, die den einzelnen Nutzern aus der Nutzer-Untermenge zugewiesen sind, gleich ist.

7. Verfahren nach einem der vorangehenden Ansprüche, wobei die Menge der Auswahlregeln ferner eine andere Regel umfasst: die zweite Authentifizierungs-Untermenge ist ferner in jeder von den ersten Authentifizierungs-Untermengen enthalten, die einem der Nutzer aus der Nutzer-Untermenge zugewiesen sind, außer dem einen von den Nutzern aus der Nutzer-Untermenge, dem die erste Authentifizierungs-Untermenge zugewiesen ist, welche die zweite Authentifizierungs-Untermenge enthält.

8. Verfahren nach einem der vorangehenden Ansprüche, wobei die Menge der Auswahlregeln ferner eine andere Regel umfasst:

   die Nutzer-Untermenge und die zweite Authentifizierungs-Untermenge werden auf eine Weise ausgewählt, in der ein Authentifizierungs-Zuordnungswert für mindestens einen von den Nutzern aus der Nutzer-Untermenge, dem die erste Authentifizierungs-Untermenge zugewiesen worden ist, größer ist als ein zweiter Schwellenwert, wobei der Authentifizierungs-Zuordnungswert für die einzelnen Nutzer, denen die erste Authentifizierungs-Untermenge zugewiesen worden ist, welche die zweite Authentifizierungs-Untermenge enthält, einem Verhältnis einer Anzahl der Authentifizierungswerte in der zweiten Authentifizierungs-Untermenge und einer Anzahl der Authentifizierungswerte in der ersten Authentifizierungs-Untermenge, die den einzelnen Nutzern zugewiesen werden, denen die erste Authentifizierungs-Untermenge zugewiesen worden ist, welche die zweite Authentifizierungs-Untermenge umfasst, gleich ist.

9. Verfahren nach einem der vorangehenden Ansprüche, wobei das Auswählen ferner das Auswählen einer dritten Authentifizierungs-Untermenge umfasst, wobei die dritte Authentifizierungs-Untermenge alle Authentifizierungswerte sämtlicher erster Authentifizierungs-Untermengen umfasst, die den Nutzern der Nutzer-Untermenge zugewiesen worden sind und die nicht in der zweiten Authentifizierungs-Untermenge enthalten sind, wobei die dritte Authentifizierungs-Untermenge dem zweiten Konto zugewiesen wird und die Ausführung eines der Computer-Codes der zweiten Code-Untermenge für jeden von den Nutzer der Nutzer-Untermenge zugelassen wird, nachdem seine Authentifizierung auf dem einen von den Computersystemen unter Verwendung der zweiten und der dritten Authentifizierungs-Untermengen durchgeführt worden ist.

10. Verfahren nach einem der vorangehenden Ansprüche, ferner umfassend:

    Entfernen der zweiten Code-Untermenge aus den ersten Code-Untermengen, die einem der Nutzer aus der Nutzer-Untermenge zugewiesen worden sind, unter Verwendung mindestens eines Prozessors; und
    Wiederholen der Durchführung der Auswahl- und Erzeugungsschritte nach der Durchführung des Entfernungsschritts.

11. Verfahren nach einem der vorangehenden Ansprüche, wobei jede von den ersten Authentifizierungs-Untermengen mindestens einen der folgenden Authentifizierungswerte umfasst: ein oder mehrere Attribute, die mit Computersicherheit in Beziehung stehen, einen Geschäftsbereich, einen Ort, eine Anlage, eine berufliche Funktion, eine Angestelltengruppe oder eine Angestelltenuntergruppe.

12. Verfahren nach einem der vorangehenden Ansprüche, ferner umfassend:

    Darstellen einer Nutzerschnittstelle für einen Nutzer auf dem einen von den Computersystemen unter Verwendung des mindestens einen Prozessors, wobei die Nutzerschnittstelle für Folgendes ausgelegt ist:

    Darstellen mindestens eines der Folgenden: mindestens eines Teils der Beziehungsdaten, mindestens eines Teils der Menge der Authentifizierungswerte, mindestens eines Teils der Menge der Computercodes, mindestens eines Teils der Menge der Nutzer, mindestens eines Teils von jeder der ersten Code-Untermengen, mindesten eines Teils von jeder der ersten Authentifizierungs-Untermengen, mindestens eines Teils der Nutzer-Untermenge, mindestens eines Teils von jeder der zweiten Authentifizierungs-Untermengen, mindestens eines Teils von jeder der zweiten Code-Untermengen, eine oder mehrere Regeln aus der Menge der Auswahlregeln und den ersten Schwellenwert, den zweiten Schwellenwert; und

Zulassen einer Nutzermodifikation mindestens eines der Folgenden: der Menge der Nutzer, der Untermenge der Nutzer, der zweiten Authentifizierungs-Untermenge, der zweiten Code-Untermenge, des ersten Schwellenwerts, des zweiten Schwellenwerts, des Wertes eines Aktivierungszustands einer oder mehrere Regeln der Menge von Auswahlregeln, wobei jede von den Regeln, die den Wert des Aktivierungszustands aufweist, der einem Wert gleich ist, zur Durchführung des Auswahlschritts verwendet wird, wobei jede von den Regeln mit dem Wert des Aktivierungszustands, der einem anderen Wert gleich ist, ignoriert wird, wenn der Auswahlschritt durchgeführt wird.

13. Computersystem (1226), umfassend:

einen Speicher;
einen Computerprozessor, der mit dem Speicher gekoppelt ist;
Befehle, die im Speicher gespeichert sind und die vom Prozessor ausführbar sind,
wobei das Computersystem dafür ausgelegt ist, über ein oder mehrere Computernetze (1226) mit anderen Computersystemen zu kommunizieren, wobei Nutzern (404) jeweils mindestens ein erstes Konto (406) auf mindestens einem der Computersysteme zugewiesen ist, wobei jedem Nutzer von zumindest einem Teil der Nutzer mehr als ein erstes Konto auf mindestens einem von den Computersystemen zugewiesen ist, wobei jedem von den ersten Konten ein oder mehrere Authentifizierungswerte (409) zugewiesen sind und ein oder mehrere Computercodes (408) zugewiesen sind, deren Ausführung für den Nutzer, der jeweils die ersten Konten hat, nach Durchführung seiner Authentifizierung unter Verwendung des einen oder der mehreren zugewiesenen Authentifizierungswerte an dem jeweiligen Computersystem, welches das erste Konto aufweist, zugelassen wird, wobei die Authentifizierungswerte und die Computercodes über den Computersystemen gespeichert sind, Ausführen der Befehle, die das System konfigurieren, zum

Abfragen von Beziehungsdaten (811), die Informationen über Beziehungen zwischen einer Menge (814) der Nutzer, einer Menge (816) der Computercodes und einer Menge (812) der Authentifizierungswerte umfassen, von den ersten Konten auf den Computersystemen, wobei die Beziehungsinformationen angeben, welche erste Code-Untermenge von der Menge von Computercodes und welche erste Authentifizierungs-Untermenge von der Menge der Authentifizierungswerte den einzelnen Nutzern aus der Menge der Nutzer zugewiesen sind;

Auswählen einer Nutzer-Untermenge (404) aus der Menge der Nutzer, einer zweiten Code-Untermenge (410) aus der Menge von Computercodes und einer zweiten Authentifizierungs-Untermenge (412) aus der Menge der Authentifizierungswerte, wobei die Nutzer-Untermenge, die zweite Code-Untermenge und die zweite Authentifizierungs-Untermenge gemäß einer Menge von Auswahlregeln ausgewählt werden, welche die folgenden Regeln umfassen:

die zweite Code-Untermenge ist in jeder von den ersten Code-Untermengen enthalten, die einem der jeweiligen Nutzer aus der Nutzer-Untermenge zugewiesen sind,
die Nutzer-Untermenge umfasst mehr als einen Nutzer und
die zweite Authentifizierungs-Untermenge ist in einer der ersten Authentifizierungs-Untermengen enthalten, die einem der Nutzer aus der Nutzer-Untermenge zugewiesen sind; und
Erzeugen eines zweiten Kontos für die einzelnen Nutzer aus der Nutzer-Untermenge unter Verwendung des mindestens einen Prozessors, wobei die zweite Authentifizierungs-Untermenge und die zweite Code-Untermenge dem zweiten Konto zugewiesen werden, wobei die Ausführung eines der Computer-Codes der zweiten Computer-Untermenge für jeden der Nutzer der Nutzer-Untermenge zugelassen wird, nachdem seine Authentifizierung an dem einen von den Computersystemen unter Verwendung der zweiten Authentifizierungs-Untermenge durchgeführt worden ist.

14. System nach Anspruch 13, wobei die Ausführung der Befehle ferner das System so konfiguriert, dass es:

die Zuordnung sämtlicher Computer-Codes der zweiten Code-Menge aus allen ersten Konten, die mit einem der Nutzer aus der Nutzer-Untermenge assoziiert sind, aufhebt; und
jedes der ersten Konten löscht, wenn den einzelnen ersten Konten keine Computer-Codes zugewiesen worden sind.

15. System nach einem der vorangehenden Ansprüche 13 oder 14, wobei die Menge der Nutzer alle Nutzer umfasst, denen mindestens ein erstes Konto zugewiesen worden ist.

16. System nach einem der vorangehenden Ansprüche 13-15, wobei die Menge der Auswahlregeln ferner eine andere Regel umfasst: die Nutzer aus der Nutzer-Untermenge und die Computer-Codes der zweiten Code-Untermenge werden auf eine Weise ausgewählt, die eine Maximierung eines Produkts einer Anzahl der Computer-Codes in der zweiten Code-Untermenge und einer Anzahl der Nutzer in der Nutzer-Untermenge ermöglicht.

17. System nach einem der vorangehenden Ansprüche 13-16, wobei die Ausführung der Befehle ferner das System so konfiguriert, dass es:

die zweite Code-Untermenge aus den ersten Code-Untermengen, die einem der Nutzer aus der Nutzer-Untermenge zugewiesen worden sind, entfernt; und
die Durchführung des Auswahl- und des Erzeugungsschrittes nach der Durchführung des Entfernungsschrittes wiederholt.

18. System nach einem der vorangehenden Ansprüche 13-17, wobei jede von den ersten Authentifizierungs-Untermengen mindestens einen der folgenden Authentifizierungswerte umfasst: ein oder mehrere Attribute, die mit Computersicherheit in Beziehung stehen, einen Geschäftsbereich, einen Ort, eine Anlage, eine berufliche Funktion, eine Angestelltengruppe oder eine Angestelltenuntergruppe.

19. System nach einem der vorangehenden Ansprüche 13-18, ferner umfassend:

eine Nutzerschnittstelle (1212, 1214, 1210), wobei die Ausführung der Befehle ferner das System so konfiguriert, dass es Folgendes über die Nutzerschnittstelle durchführt:

Darstellen mindestens eines der Folgenden: mindestens eines Teils der Beziehungsdaten, mindestens eines Teils der Menge der Authentifizierungswerte, mindestens eines Teils der Menge der Computercodes, mindestens eines Teils der Menge der Nutzer, mindestens eines Teils von jeder der ersten Code-Untermengen, mindesten eines Teils von jeder der ersten Authentifizierungs-Untermengen, mindestens eines Teils der Nutzer-Untermenge, mindestens eines Teils von jeder der zweiten Authentifizierungs-Untermengen, mindestens eines Teils von jeder der zweiten Code-Untermengen, eine oder mehrere Regeln aus der Menge der Auswahlregeln und den ersten Schwellenwert, den zweiten Schwellenwert; und
Zulassen einer Nutzermodifikation mindestens eines der Folgenden: des ersten Schwellenwerts, des zweiten Schwellenwerts, des Wertes eines Aktivierungszustands einer oder mehrere Regeln der Menge von Auswahlregeln, wobei jede von den Regeln, die den Wert des Aktivierungszustands aufweist, der einem Wert gleich ist, zur Durchführung des Auswahlschritts verwendet wird, wobei jede von den Regeln mit dem Wert des Aktivierungszustands, der einem anderen Wert gleich ist, ignoriert wird, wenn der Auswahlschritt durchgeführt wird.

20. Computerlesbares Medium, auf dem computerausführbarer Code für die Ausführung durch einen Mikroprozessor gespeichert ist, der ein Computersystem steuert, wobei die Ausführung der Befehle des ausführbaren Codes bewirkt, dass der Mikrocomputer ein computerimplementiertes Verfahren nach einem der Ansprüche 1-12 ausführt.

**Revendications**

1. Procédé mis en oeuvre par un ordinateur pour la gestion des premiers comptes (406) d'utilisateurs (404) sur des systèmes informatiques (1200) couplés pour communiquer les uns avec les autres par l'intermédiaire d'un ou plusieurs réseaux informatiques (1226), dans lequel chacun des utilisateurs a au moins un premier compte attribué sur au moins l'un des systèmes informatiques, dans lequel chacun des utilisateurs parmi au moins une partie des utilisateurs a plus d'un premier compte attribué sur au moins l'un des systèmes informatiques, dans lequel chacun des premiers comptes a une ou plusieurs valeurs d'authentification attribuées (409) et un ou plusieurs codes informatiques attribués (408) dont l'exécution est autorisée pour l'utilisateur ayant chacun des premiers comptes après que son authentification en utilisant la ou les plusieurs valeurs d'authentification attribuées ait été réalisée sur le système informatique correspondant qui a ce premier compte, dans lequel les valeurs d'identification et les codes informatiques sont stockés à travers les systèmes informatiques, le procédé comprenant :

l'obtention, en utilisant au moins un processeur de l'un des systèmes informatiques, à partir des premiers comptes sur les données de liaison des systèmes informatiques (811) comprenant les informations de liaison entre un ensemble (814) d'utilisateurs, un ensemble (816) de codes informatiques, et un ensemble (812) de valeurs d'authentification, les informations de liaison identifiant lequel parmi le premier sous-ensemble de codes de l'ensemble des codes informatiques et lequel parmi le premier sous-ensemble d'authentification de l'ensemble des valeurs d'authentification sont attribués à chacun des utilisateurs de l'ensemble des utilisateurs (502, 504) ;

le choix, par l'utilisation du au moins un processeur, d'un sous-ensemble d'utilisateurs (404) de l'ensemble des utilisateurs, d'un second sous-ensemble de codes (410) de l'ensemble des codes informatiques, et d'un second sous-ensemble d'authentification (412) de l'ensemble des valeurs d'authentification, dans lequel le sous-ensemble d'utilisateurs, le second sous-ensemble de codes, et le second sous-ensemble d'authentification sont choisis en fonction d'un ensemble des règles de sélection comprenant les règles suivantes :

le second sous-ensemble de codes est compris dans chacun des premiers sous-ensembles de codes attribué à l'un quelconque parmi les utilisateurs correspondants du sous-ensemble d'utilisateurs,
le sous-ensemble d'utilisateurs comprend plus d'un seul utilisateur, et
le second sous-ensemble d'authentification est compris dans l'un des premiers sous-ensembles d'authentification attribué à l'un des utilisateurs du sous-ensemble d'utilisateurs (506, 508, 510) ; et
la création, en utilisant l'au moins un processeur, d'un second compte pour chacun des utilisateurs du sous-ensemble d'utilisateurs, dans lequel le second sous-ensemble d'authentification et le second sous-ensemble de codes sont attribués au second compte, dans lequel l'exécution de l'un quelconque parmi les codes informatiques du second sous-ensemble de codes est autorisée pour chacun des utilisateurs du sous-ensemble d'utilisateurs après que son authentification ait été réalisée sur l'un des systèmes informatiques utilisant le second sous-ensemble d'authentification (512).

2. Procédé selon la revendication 1, dans lequel lesdits systèmes informatiques et lesdits réseaux informatiques sont compris dans un nuage informatique, dans lequel les valeurs d'authentification et les codes informatiques sont stockés au travers des systèmes informatiques dans le nuage informatique.

3. Procédé selon l'une quelconque des revendications précédentes, comprenant en outre ;
la reprise de l'attribution, en utilisant l'au moins un processeur, de tous les codes informatiques du second ensemble de codes à partir des premiers comptes associés à l'un quelconque parmi les utilisateurs du sous-ensemble d'utilisateurs (514), et
la suppression, en utilisant l'au moins un processeur, de chacun des premiers comptes, lorsque chacun des premiers comptes n'a pas de codes informatiques attribués (514).

4. Procédé selon l'une quelconque des revendications précédentes, dans lequel l'ensemble des utilisateurs comprend tous les utilisateurs ayant au moins un premier compte attribué.

5. Procédé selon l'une quelconque des revendications précédentes, dans lequel l'ensemble des règles de sélection comprend en outre une autre règle : les utilisateurs du sous-ensemble d'utilisateurs et les codes informatiques du second sous-ensemble de codes sont choisis d'une manière permettant la maximisation d'un produit entre un nombre de codes informatiques dans le second sous-ensemble de codes et un nombre d'utilisateurs dans le sous-ensemble d'utilisateurs.

6. Procédé selon l'une quelconque des revendications précédentes, dans lequel l'ensemble des règles de sélection comprend en outre une autre règle : les utilisateurs du sous-ensemble d'utilisateurs et les codes informatiques du second sous-ensemble de codes sont choisis de manière à ce qu'une valeur d'association de codes pour au moins l'un des utilisateurs du sous-ensemble d'utilisateurs est plus grande qu'une première valeur de seuil, dans lequel la valeur d'association de codes pour chacun des utilisateurs du sous-ensemble d'utilisateurs est égale au ratio entre le nombre de codes informatiques dans le second sous-ensemble de codes et le nombre de codes informatiques dans le premier sous-ensemble de codes attribué à chacun des utilisateurs du sous-ensemble d'utilisateurs.

7. Procédé selon l'une quelconque des revendications précédentes, dans lequel l'ensemble des règles de sélection comprend en outre un autre règle : le second sous-ensemble d'authentification est en outre compris dans chacun des premiers sous-ensembles d'authentification attribué à l'un quelconque des utilisateurs parmi le sous-ensemble d'utilisateurs à l'exception de celui parmi les utilisateurs du sous-ensemble d'utilisateurs ayant le premier sous-ensemble d'authentification attribué comprenant le second sous-ensemble d'authentification.

8. Procédé selon l'une quelconque des revendications précédentes, dans lequel l'ensemble des règles de sélection comprend en outre une autre règle :

le sous-ensemble d'utilisateurs et le second sous-ensemble d'authentification sont choisis de manière à ce qu'une valeur d'association d'authentification pour au moins l'un des utilisateurs du sous-ensemble d'utilisateurs ayant le premier sous-ensemble d'authentification attribué comprenant le second sous-ensemble d'authentification est plus importante que la seconde valeur de seuil, dans lequel la valeur d'association d'authentification pour chacun des utilisateurs ayant le premier sous-ensemble d'authentification attribué comprenant le second sous-ensemble d'authentification est égal au ratio entre le nombre des valeurs d'authentification dans le second sous-ensemble d'authentification et le nombre des valeurs d'authentification dans le premier sous-ensemble d'authentification attribué à chacun des utilisateurs ayant le premier sous-ensemble d'authentification attribué comprenant le second sous-ensemble d'authentification.

9. Procédé selon l'une quelconque des revendications précédentes, dans lequel la sélection comprend en outre le choix d'un troisième sous-ensemble d'authentification, dans lequel le troisième sous-ensemble d'authentification comprend toutes les valeurs d'authentification de tous les premiers sous-ensembles d'authentification attribués aux utilisateurs du sous-ensemble d'utilisateurs qui ne sont pas compris dans le second sous-ensemble d'authentification, dans lequel le troisième sous-ensemble d'authentification est attribué au second compte et l'exécution de l'un quelconque parmi les codes informatiques du second sous-ensemble de codes est autorisée pour chacun des utilisateurs du sous-ensemble d'utilisateurs après que son authentification ait été réalisée sur l'un des systèmes informatiques utilisant le second et le troisième sous-ensemble d'authentification.

10. Procédé selon l'une quelconque des revendications précédentes, comprenant en outre :

le retrait, en utilisant l'au moins un processeur, du second sous-ensemble de codes à partir de chacun des premiers sous-ensembles de codes attribué à l'un quelconque parmi les utilisateurs du sous-ensemble d'utilisateurs ; et
la répétition de la réalisation de la sélection et la création d'une opération après la réalisation de l'opération de retrait.

11. Procédé selon l'une quelconque des revendications précédentes, dans lequel chacun des premiers sous-ensembles d'authentification comprend au moins l'une des valeurs d'authentification suivantes : un ou plusieurs attributs liés à la sécurité informatique, une zone de travail, une localisation, une implantation, une fonction de tâche, un titre de tâche, une zone personnelle, un groupe employé, ou un sous-groupe employé.

12. Procédé selon l'une quelconque des revendications précédentes, comprenant en outre :

la présentation, en utilisant le au moins un processeur, d'une interface utilisateur à un utilisateur sur l'un des systèmes informatiques, dans lequel l'interface utilisateur est configurée pour :

présenter au moins l'un des éléments suivants : au moins une partie des données de liaison, au moins une partie de l'ensemble des valeurs d'authentification, au moins une partie de l'ensemble des codes informatiques, au moins une partie de l'ensemble des utilisateurs, au moins une partie de chacun des premiers sous-ensembles de code, au moins une partie des premiers sous-ensemble d'authentification, au moins une partie du sous-ensemble d'utilisateurs, au moins une partie des seconds sous-ensembles d'authentification, au moins une partie de chacun des seconds sous-ensembles de codes, une ou plusieurs règles de l'ensemble des règles de sélection, et la première valeur de seuil, la seconde valeur de seuil ; et
autoriser la modification par l'utilisateur d'au moins l'un des éléments suivants : de l'ensemble des utilisateurs, du sous-ensemble des utilisateurs, du second sous-ensemble d'authentification, du second sous-ensemble de code, de la première valeur de seuil, de la seconde valeur de seuil, de la valeur des statuts d'activation de l'une ou de plusieurs règles de l'ensemble des règles de sélection, dans lequel chacune des règles ayant la valeur du statut d'activation égale à une valeur est utilisée pour réaliser l'opération de sélection, dans lequel chacune des règles ayant la valeur du statut d'activation égale à une autre valeur est ignorée lorsque l'opération de sélection est en cours de réalisation.

13. Système informatique (1226) comprenant :

une mémoire ;
un processeur d'ordinateur couplé à la mémoire ;
des instructions stockées dans la mémoire et à exécuter par le processeur ;
dans lequel le système informatique est configuré pour communiquer avec d'autres systèmes informatiques au moyen d'un ou de plusieurs réseaux informatiques (1226), dans lequel chacun des utilisateurs (404) possède au moins un premier compte attribué (406) sur au moins l'un des systèmes informatiques, dans lequel chacun des utilisateurs parmi au moins une partie des utilisateurs a plus d'un premier compte attribué sur au moins l'un des systèmes informatiques, dans lequel chacun parmi les premiers comptes a une ou plusieurs valeurs d'authentification attribuées (409) et un ou plusieurs codes informatiques attribués (408) dont l'exécution est autorisée pour l'utilisateur disposant de chacun des premiers comptes après son authentification en utilisant la ou plusieurs valeurs d'authentification attribuées est réalisée sur le système informatique correspondant qui a ce premier compte, dans lequel les valeurs d'authentification et les codes informatiques sont stockés à travers les systèmes informatiques,

l'exécution des instructions configurant le système pour :

obtenir à partir des premiers comptes des systèmes informatiques les données de liaison (811) comprenant les informations de liaison entre l'ensemble (814) des utilisateurs, l'ensemble (816) des codes informatiques, et l'ensemble (812) des valeurs d'authentification, l'information de liaison identifiant lequel parmi les premiers sous-ensembles de codes de l'ensemble des codes informatiques et lequel parmi les premiers sous-ensembles d'authentification de l'ensemble des valeurs d'authentification sont attribués à chacun des utilisateurs de l'ensemble des utilisateurs ;

choisir un sous-ensemble d'utilisateurs (404) dans l'ensemble des utilisateurs, un second sous-ensemble de codes (410) de l'ensemble des codes d'utilisateur, et un second sous-ensemble d'authentification (412) de l'ensemble des valeurs d'authentification, dans lequel le sous-ensemble d'utilisateurs, le second sous-ensemble de codes, et le second sous-ensemble d'authentification sont choisis selon un ensemble de règles de sélection comprenant les règles suivantes :

le second sous-ensemble de codes est compris dans chacun des premiers sous-ensembles de codes attribué à l'un quelconque parmi les utilisateurs correspondants du sous-groupe d'utilisateurs,

le sous-groupe d'utilisateurs comprend plus d'un utilisateur, et

le second sous-groupe d'authentification est compris dans l'un des premiers sous-groupes d'authentification attribué à l'un des utilisateurs du sous-groupe d'utilisateurs ; et

la création, en utilisant l'au moins un processeur, d'un second compte pour chacun des utilisateurs du sous-ensemble d'utilisateurs, dans lequel le second sous-ensemble d'authentification et le second sous-ensemble de codes sont attribués à ce second code, dans lequel l'exécution de l'un quelconque parmi les codes informatiques du second sous-ensemble de codes est autorisée pour chacun des utilisateurs du sous-ensemble d'utilisateurs après que son authentification ait été réalisée sur l'un des systèmes informatiques en utilisant le second sous-ensemble d'authentification.

14. Système selon la revendication 13, dans lequel l'exécution des instructions configure en outre le système pour :

retirer l'attribution de tous les codes informatiques du second ensemble de tous les premiers comptes associés à l'un quelconque parmi les utilisateurs du sous-ensemble d'utilisateurs ; et

supprimer chacun des premiers comptes, lorsque chacun des premiers comptes n'a pas de codes informatiques attribués.

15. Système selon l'une quelconque des revendications précédentes 13 ou 14, dans lequel l'ensemble des utilisateurs comprend tous les utilisateurs qui possèdent au moins un premier compte attribué.

16. Système selon l'une quelconque des revendications précédentes 13 à 15, dans lequel l'ensemble des règles de sélection comprend en outre une autre règle : les utilisateurs du sous-ensemble d'utilisateurs et les codes informatiques du second sous-ensemble de codes sont choisis de manière à permettre la maximisation du produit entre un nombre de codes informatiques dans le second sous-ensemble de codes et un nombre d'utilisateurs dans le sous-ensemble d'utilisateurs.

17. Système selon l'une quelconque des revendications précédentes 13 à 16, dans lequel l'exécution des instructions configure en outre le système pour :

retirer le second sous-ensemble de codes de chacun des premiers sous-ensembles de codes attribué à n'importe lequel parmi les utilisateurs du sous-ensemble d'utilisateurs ; et

répéter la réalisation de la sélection et l'opération de création après la réalisation du retrait.

**18.** Système selon l'une quelconque des revendications précédentes 13 à 17, dans lequel chacun des premiers sous-ensembles d'authentification comprend au moins l'une des valeurs d'authentification suivante : un ou plusieurs attributs liés à la sécurité informatique, une zone de travail, une localisation, une implantation, une fonction de tâche, un titre de tâche, une zone personnelle, un groupe employé, ou un sous-groupe employé.

**19.** Système selon l'une quelconque des revendications précédentes 13 à 18 comprenant en outre :

une interface utilisateur (1212, 1214, 1210), dans laquelle l'exécution des instructions configure en outre le système pour réaliser les actions suivantes par le biais de l'interface utilisateur :

présenter au moins l'une des indications suivantes : au moins une partie des données de liaison, au moins une partie de l'ensemble des valeurs d'autorisation, au moins une partie de l'ensemble des codes informatiques, au moins une partie de l'ensemble des utilisateurs, au moins une partie de chacun des premiers sous-ensembles de codes, au moins une partie de chacun des premiers sous-ensembles d'authentification, au moins une partie du sous-ensemble d'utilisateurs, au moins une partie de chacun des seconds sous-ensembles d'authentification, au moins une partie de chacun des seconds sous-ensembles de codes, une ou plusieurs règles de l'ensemble des règles de sélection, et la première valeur de seuil, la seconde valeur de seuil ; et

autoriser la modification par l'utilisateur d'au moins une indication parmi les indications suivantes : la première valeur de seuil, la seconde valeur de seuil, la valeur du statut d'activation de l'une ou de plusieurs règles de l'ensemble des règles de sélection, dans laquelle chacune des règles ayant la valeur du statut d'activation égale à une valeur est utilisée pour réaliser l'opération de sélection, dans laquelle chacune des règles ayant la valeur du statut d'activation égale à une autre valeur est ignorée lorsque l'opération de sélection est en cours de réalisation.

**20.** Support lisible par ordinateur sur lequel est stocké le code exécutable par ordinateur pour l'exécution par un microprocesseur contrôlant le système informatique, dans lequel l'exécution de l'instruction du code exécutable provoque l'exécution par le microprocesseur d'un procédé mis en ouvre par ordinateur selon l'une quelconque des revendications 1 à 12.

100

Presentation Layer — 102

Application Layer — 104

106 — Tools

108

Applications

116 — Transaction Codes | Authorization Objects — 114

Database Management System — 110

Database Layer

Database — 112

*FIG. 1*

200

| Information Type | 202 |
| Information Subtype | 204 |
| Authorization Level | 206 |
| Personnel Area | 208 |
| Employee Group | 210 |
| Employee SubGroup | 212 |
| Organizational Key | 214 |

Data

Auth.

Org Values

*FIG. 2*

FIG. 3

EP 2 849 114 B1

400

404

User

406

Role

408

Trans.
Code

409

Auth.
Object

402

404

User

410

Task Role

412

Enabler
Role

414

Trans.
Code

416

Auth.
Objects

FIG. 4

500

502

Extract System
Role and
Authorization Data

504

Map and
Normalize
Extracted Info.

506

Identify Tuning
Parameters and
Partitions

508

Determine
Candidate Task
Roles and Enabler
Roles

510

Evaluate and
Optimize
Candidate Roles

512

Create and
Combine
Refactored Roles

514

Update User
Assignments with
Refactored Roles

*FIG. 5*

EP 2 849 114 B1

600

602

ERP System

604
User Assignment
Data

606
Role to T-Code

608
T-Code Auth.
Objects

610
User Identity &
Org. Data

612
Mapping and
Normalization
Engine

614
T-Code to
Org Value Map

616
T-Code to Role
Map

618
User to Role Map

620
Role Refactoring
Engine

622
Tuning Parameters

624
Refactored Roles

*FIG. 6*

User Assignment Data 702

Role to T-Code 704

T-Code Auth. Objects 706

User Identity & Org. Data 708

User 710

Role 712

T-Code 714

Org. Values 716

User to Role Map 718

Role to T-Code Map 720

T-Code to Org Value Map 722

*FIG. 7*

FIG. 8

900

902
Determine Tuning
Parameters

904
Determine Scope:
Identify Largest
Coverage Area

906
Identify Candidate
Role / Separate
into Task &
Enabler Roles

908
Remove the
Covered Area
from Data

910
Yes — All Data
Exhausted?

No

912
End

*FIG. 9*

*FIG. 10*

1100  1102

**Presentation Layer**

1104
1106

**Application Layer**

**Presentation Components**

1108    1110    1112
**Tools** | **Data Dictionary** | **Applications**

1114
**Kernel and Services**

1120

**Presentation Layer**

1122
1124

**Application Layer**

**Presentation Components**

1126    1128    1130
**Tools** | **Data Dictionary** | **Applications**

1132
**Kernel and Services**

1134
**In-Memory Database System**

1116

**Database Management System**

Database Layer  1118

**Database**

*FIG. 11*

*FIG. 12*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011277026 A1

**Non-patent literature cited in the description**

- **J. VAIDYA ; V. ATLURI ; Q. GWO.** The Role Mining Problem: Finding a Minimum Descriptive Set of Roles. *Proc. ACM SACMAT,* 2007, 175-184

- **D.S. HOLCHBAUM.** Approximating Clique and Bi-cliqueProblems. *Journal on Algorithms,* 1998, vol. 29, 174-200